# EUROPEAN PATENT SPECIFICATION

(11) **EP 3 668 211 B1**
(45) Date of publication and mention of the grant of the patent: **04.12.2024**
(21) Application number: 17920706.3
(22) Date of filing: 10.08.2017
(51) Int. Cl.: H04W 72/04, H04W 28/06, H04L 5/00

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 17.06.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); GUO, Shaozhen, Beijing 100190 (CN); HOU, Xiaolin, Beijing 100190 (CN)
(74) Representative: Hoffmann Eitle
(86) International application number: PCT/JP2017/029215
(87) International publication number: WO 2019/030925

(56) References cited:
- EP-A1- 3 480 977
- EP-A1- 3 606 225
- EP-A1- 3 621 236
- EP-A2- 3 641 393
- JP-A- 2007 208 484
- HUAWEI ET AL: "UE behavior related to group-common PDCCH", vol. RAN WG1, no. Qingdao, China; 20170627 - 20170630, 26 June 2017 (2017-06-26), XP051299687, Retrieved from the Internet <URL:http://www.3gpp.org/ftp/Meetings_3GPP_SYNC/RAN1/Docs/> [retrieved on 20170626]
- ZTE: "Group-common PDCCH design consideration", vol. RAN WG1, no. Qingdao, China; 20170626 - 20170630, 26 June 2017 (2017-06-26), XP051299334, Retrieved from the Internet <URL:http://www.3gpp.org/ftp/Meetings_3GPP_SYNC/RAN1/Docs/> [retrieved on 20170626]
- MEDIATEK INC.: "Discussion on slot structure and channel format", 3GPP TSG RAN WG1 #86BIS R1-1609555, 1 October 2016 (2016-10-01), pages 1 - 6, XP051159622, Retrieved from the Internet <URL:http://www.3gpp.org/ftp/tsg-ran/WG1-RL1/TSGR1-86b/Docs/R1-1609555.zip> [retrieved on 20171012]
- NTT DOCOMO, INC.: "RAN WG's progress on NR technology SI in the January adhoc meeting", 3GPP TSG-RAN WG2 #97 R2-1701059, 8 February 2017 (2017-02-08), pages 26, XP051223866
- "TDD frame structure with mixed numerology", 3GPP TSG RAN WG1 MEETING #87 R1-1611460, 4 November 2016 (2016-11-04), pages 1 - 4, XP051189073

## Description

### Technical Field

The present invention relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of wider bands and a higher speed than those of LTE, LTE successor systems (also referred to as, for example, LTE-Advanced (LTE-A), Future Radio Access (FRA), 4G, 5G, 5G+ (plus), New RAT (NR) or LTE Rel. 13, 14 or 15~) have been also studied.

Furthermore, legacy LTE systems (e.g., LTE Rel. 8 to 13) perform communication on Downlink (DL) and/or Uplink (UL) in a scheduling unit of a subframe of 1 ms. In a case of, for example, Normal Cyclic Prefix (NCP), the subframe includes 14 symbols of 15 kHz in subcarrier spacing. The subframe is also referred to as a Transmission Time Interval (TTI).

Furthermore, the legacy LTE systems support Time Division Duplex (TDD) and/or Frequency Division Duplex (FDD). According to TDD, a transmission direction of each subframe is semi-statically controlled based on a UL/DL configuration that defines the transmission direction (UL and/or DL) of each subframe in a radio frame.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

In the standard contribution entitled "UE behavior related to group-common PDCCH" (Rl-1710476), Huawei et al. discuss UE behavior with or without 'group-common PDCCH', and slot format information interpretation when a UE is configured with multiple bandwidth parts. The authors disclose that slot format related information (SFI) in a slot can be indicated in several ways including on a per component carrier basis, on a per numerology basis and on a per bandwidth part basis.

In the standard contribution entitled "Group-common PDCCH design consideration" (R1-1710110), ZTE discuss content and transmission of the common control. The authors disclose that same or different SFI indication in different BWPs of system bandwidth should be clarified and propose that, for different BWPs in a system bandwidth, UE should assume same slot format.

EP 3 606 225 A1 discloses a method for receiving, by a terminal, downlink control information in a wireless communication system comprising the steps of: receiving information on a reference subcarrier spacing (SCS) from among a plurality of SCS numerologies; receiving downlink control information through a terminal group common physical downlink control channel (PDCCH); and obtaining information on a slot format from the downlink control information, wherein the downlink control information indicates the slot format on the basis of the reference SCS, and when the SCS of the terminal is different from the reference SCS, the terminal may convert the slot format of the reference SCS according to the SCS of the terminal.

EP 3 621 236 A1 discloses a control information sending method including: determining, by an access network device, at least one piece of downlink control information, where the downlink control information includes at least one slot format indication; and sending, by the access network device, the downlink control information to a group of user equipments on a group common downlink control channel, where the group of user equipments operates in M bandwidth parts, the at least one slot format indication is used to indicate a slot format corresponding to N numerologies of the M bandwidth parts, and both N and M are positive integers greater than 1.

EP 3 641 393 A2 discloses a method for configuring a bandwidth for supporting a broadband carrier in a communication system. An operation method of a base station comprises the steps of: configuring a first bandwidth part and a second bandwidth part for a terminal; configuring a reserved resource for the first bandwidth part in a resource area in which the first bandwidth part and the second bandwidth part overlap; and performing an operation of transmitting or receiving a second data channel, which is scheduled to the second bandwidth part, together with the terminal by using the reserved resource.

EP 3 480 977 A1 discloses a method for receiving downlink control information by a terminal in a wireless communication system comprising the steps of: performing blind detection of a group-common physical downlink control channel (PDCCH) in a common search space (CSS) having a plurality of PDCCH candidates; and acquiring downlink control information (DCI) indicating a slot format from the group-common PDCCH acquired through the blind detection, wherein, in the blind detection of the group-common PDCCH, the terminal attempts to selectively detect the group-common PDCCH for only a PDCCH candidate at a predetermined position in the CSS having the plurality of PDCCH candidates.

### Summary of Invention

### Technical Problem

It has been studied for a future radio communication system (e.g., NR) to use a time unit (such as a slot and/or a mini slot) different from subframes of legacy LTE systems (e.g., LTE Rel. 8 to 13) in a scheduling unit of a data channel (including a DL data channel (e.g., PDSCH: Physical downlink Shared Channel) and/or a UL data channel (e.g., PUSCH: Physical Uplink Shared Channel), and referred to simply as data or a shared channel). It has been also studied to dynamically control the transmission direction (UL or DL) of each symbol.

Furthermore, it has been studied for a future radio communication system (e.g., NR) to configure part of frequency bands to a frequency band (e.g., a carrier frequency band (a Component Carrier (CC) or a system band) to be configured to a user terminal (User Equipment: UE).

The present invention has been made in light of this point, and one of objects of the present invention is to provide a user terminal and a radio communication method that can control an operation in part of frequency bands.

### Solution to Problem

The present invention provides a terminal, in accordance with claim 1.

The present invention also provides a radio communication method of a terminal, in accordance with claim 4.

The present invention also provides a system comprising a terminal and a base station, in accordance with claim 5.

According to the present invention, it is possible to control an operation in part of frequency bands.

### Brief Description of Drawings

Figs. 1A and 1B are diagrams illustrating one example of formats of one or more slots determined slot format related information.
Figs. 2A and 2B are diagrams illustrating one example of an SFI interpretation method according to an option 1-1 according to a first embodiment.
Fig. 3 is a diagram illustrating one example of a table that associates a BWP, an SFI value and a slot pattern.
Fig. 4 is a diagram illustrating one example of the SFI interpretation method according to a choice 1 of an option 2-1 according to the first embodiment.
Fig. 5 is a diagram illustrating one example of the SFI interpretation method according to a choice 2 of the option 2-1 according to the first embodiment.
Figs. 6A and 6B are diagrams illustrating one example of an SFI interpretation method according to an option 2-2 according to the first embodiment.
Fig. 7 is a diagram illustrating one example of a table that associates a numerology, an SFI value and a slot pattern.
Fig. 8 is a diagram illustrating one example of the SFI interpretation method according to a choice 1 of an option 3-1 according to the first embodiment.
Fig. 9 is a diagram illustrating one example of the SFI interpretation method according to a choice 2 of the option 3-1 according to the first embodiment.
Figs. 10A and 10B are diagrams illustrating one example of the SFI interpretation method according to an option 3-2 according to the first embodiment.
Fig. 11 is a diagram illustrating one example of the SFI interpretation method for a plurality of slots of one BWP in an option 1-1 according to a second embodiment.
Fig. 12 is a diagram illustrating one example of the SFI interpretation method in a case where frequency domains of a plurality of BWPs do not overlap in the option 1-1 according to the second embodiment.
Fig. 13 is a diagram illustrating one example of the SFI interpretation method in a case where the frequency domains of a plurality of BWPs overlap in the option 1-1 according to the second embodiment.
Fig. 14 is a diagram illustrating one example of the SFI interpretation method for a plurality of slots of one BWP in an option 1-1 according to the second embodiment.
Fig. 15 is a diagram illustrating one example of the SFI interpretation method in a case where frequency domains of a plurality of BWPs do not overlap in the option 1-2 according to the second embodiment.
Fig. 16 is a diagram illustrating one example of the SFI interpretation method in a case where the frequency domains of a plurality of BWPs overlap in the option 1-2 according to the second embodiment.
Fig. 17 is a diagram illustrating one example of the SFI interpretation method according to a choice 1 of an option 2 according to the second embodiment.
Fig. 18 is a diagram illustrating one example of the SFI interpretation method according to a choice 2 of the option 2 according to the second embodiment.
Fig. 19 is a diagram illustrating one example of a schematic configuration of a radio communication system according to present embodiment.
Fig. 20 is a diagram illustrating one example of an overall configuration of a radio base station according to the present embodiment.
Fig. 21 is a diagram illustrating one example of a function configuration of the radio base station according to the present embodiment.
Fig. 22 is a diagram illustrating one example of an overall configuration of a user terminal according to the present embodiment.
Fig. 23 is a diagram illustrating one example of a function configuration of the user terminal according to the present embodiment.
Fig. 24 is a diagram illustrating one example of hardware configurations of the radio base station and the user terminal according to the present embodiment.

### Description of Embodiments

Furthermore, a future radio communication system (e.g., NR) is assumed to be standardized stepwise similar to initial introduction (e.g., 5G, LTE Rel. 15 and subsequent releases or phase 1) and persistent development (e.g., 5G+, LTE Rel. 16 and subsequent releases or phase 2) of an initially introduced specification.

Hence, it has been studied for the future radio communication system to use a time unit (such as a slot and/or a mini slot and/or one or a plurality of OFDM symbols) different from subframes of legacy LTE systems (e.g., LTE Rel. 8 to 13) in a scheduling unit of a data channel (including a DL data channel (e.g., PDSCH) and/or a UL data channel (e.g., PUSCH), and referred to simply as data or a shared channel) by taking forward compatibility into account.

In this regard, the slot is a time unit based on numerologies (e.g., a subcarrier spacing and/or a symbol length) applied by a user terminal. The number of symbols per slot may be defined according to the subcarrier spacing. When, for example, the subcarrier spacing is 15 kHz or 30 kHz, the number of symbols per slot may be 7 or 14 symbols. On the other hand, when the subcarrier spacing is 60 kHz or more, the number of symbols per slot may be 14 symbols. The mini slot is a time unit having a shorter time duration (or a smaller number of symbols) than that of the slot.

Furthermore, it has been studied to configure one or more Bandwidth Parts (BWPs, bandwidth parts, part frequency bands or part bands) to the user terminal. Configuration information of each BWP configured to the user terminal may include information indicating at least one of a numerology (e.g., subcarrier spacing) of each BWP, a frequency position (e.g., center frequency), a bandwidth (also referred to as, for example, the number of Resource Blocks (also referred to as RBs or Physical RBs (PRBs)), and a time resource (e.g., a slot (mini slot) index or a periodicity). The configuration information may be notified to the user terminal by higher layer signaling or Medium Access Control (MAC) signaling.

Furthermore, it has been studied for the future radio communication system (e.g., NR) to make it possible to indicate given time and/frequency resources (time/frequency resources) for which the user terminal should not assume anything (e.g., control and/or an operation related to transmission and/or reception) in a time unit (e.g., at least one of one or more slots, one or mini slots and one or more symbols) that is a data channel scheduling unit. In this regard, in the resource for which "anything (e.g., the control and/or the operation related to transmission and/or reception) should not be assumed, the user terminal turns off a transceiver used for transmission and/or reception, i.e., for example, Automatic Gain Control (AGC) of a receiver does not take power of the resource into account or transmission power is lowered to given off power or less.

The given time/frequency resources are provided for forward compatibility, for example. The given time/frequency resources are also referred to as Unknown resources, reserved resources, blank resources or unused resources.

A time resource reserved (configured) as an Unknown resource only needs to be at least one of, for example, one or more symbols, one or more slots and one or more mini symbols. Furthermore, the frequency resource reserved as the Unknown resource is a frequency band (also referred to as, for example, a carrier (Component Carrier (CC) or a system band) to be configured to the user terminal, or at least part of a BWP configured to at least part of the carrier. For example, the frequency resource may be the entire carrier (or BWP) or may be a subset of a PRB that composes the carrier (or BWP).

Furthermore, it has been also studied for the above future radio communication system to dynamically control the transmission direction (UL and/or DL) per symbol. For example, it has been studied that information (also referred to as Slot Format related Information (SFI)) related to a format of a slot indicates formats of one or more slots (slot formats).

More specifically, it has been studied that the SFI notifies the UE of the number of slots and information related to slot formats of the slots. It has been studied that the slot format indicates at least one of a transmission direction per given time (e.g., every given number of symbols or every given number of slots) in one or more slots, a Guard Period (GP), and an Unknown resource.

The SFI may be included in group common Downlink Control Information (group common DCI) carried on a downlink control channel (group common Physical Downlink Control Channel (PDCCH)) that is common to a group including one or more user terminals.

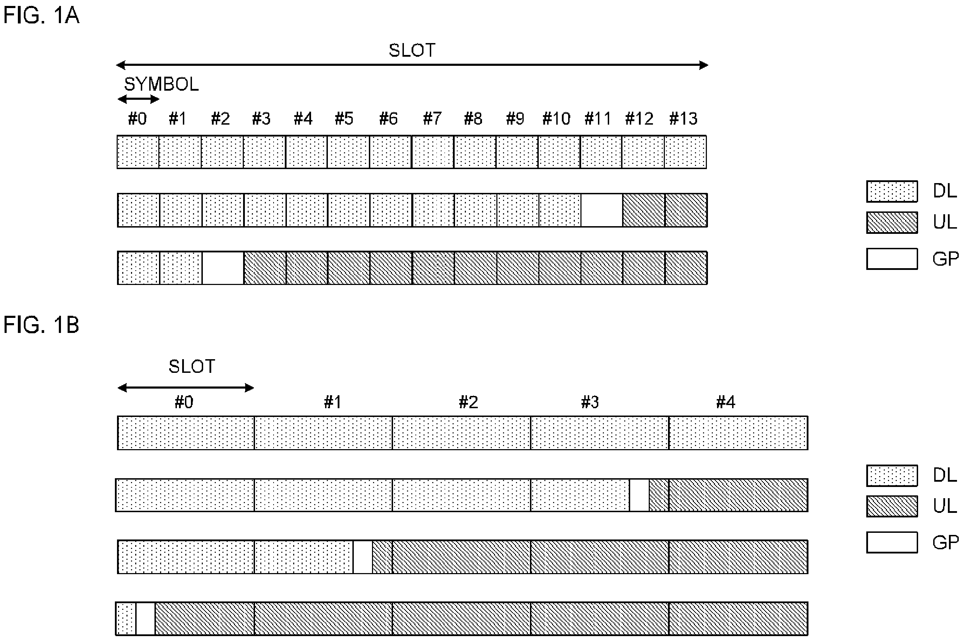

Fig. 1 is a diagram illustrating one example of formats of one or more slots determined based on slot format related information. Fig. 1A illustrates a transmission direction and/or a GP of each symbol in 1 slot. As illustrated in Fig. 1A, there may be provided a plurality of slot formats whose at least one of positions and/or the number of symbols for DL (also referred to as DL symbols) in 1 slot, positions and/or the number of symbols for UL (also referred to as UL symbols), and positions and/or the number of symbols for a GP (also referred to as GP symbols) are different. In addition, Fig. 1A is only exemplary, and the number of symbols in a slot is not limited to illustrated one.

Fig. 1B illustrates a transmission direction and/or a guard period of each slot of a plurality of slots (5 slots in this case). As illustrated in Fig. 1B, there may be provided a plurality of slot formats whose at least one of positions and/or the number of slots for DL (also referred to as DL slots) in a plurality of slots, positions and/or the number of slots for UL (also referred to as UL slots), and positions and/or the number of slots for a GP (also referred to as GP slots) are different. The GP slot may include one or more DL symbols, one or more GP symbols and one or more UL symbols.

Cases illustrated in Figs. 1A and 1B assume that the SFI indicates time resources (e.g., one or more symbols in Fig. 1A and one or more slots in Fig. 1B) for DL and/or UL, and time resources (not illustrated) reserved (configured) as Unknown resources as slot format related information, i.e., that the SFI indicates slot format related information in a time direction. In addition, numerologies (an OFDM subcarrier spacing and a cyclic prefix length) for indicating a slot format or slot format related information may be determined based on parameters used to transmit and receive the SFI, may indicate which one of numerologies is used based on control information transmitted and received together with the SFI, or may be implicitly recognized based on a given signal (e.g., a synchronization signal or a broadcast channel).

Information indicating a type (a transmission direction, usage and an operation) of each symbol in one slot may be referred to as a slot pattern (pattern). The type may be, for example, one of UL, DL and Unknown. The UE controls an operation such as transmission and reception according to the slot pattern.

In the following drawings, the slot pattern indicates one type of UL (U), DL (D) and Unknown (G or GP) per symbol. In the following drawings, the Unknown resource in a slot pattern is indicated as "G" (guard period or a gap). However, the guard period indicated as G may be configured as an Unknown resource or may not be configured as an Unknown resource. Furthermore, the Unknown resource may be used as a guard period for switching between DL and UL, or may not be used as a guard period. For example, an Unknown resource for not performing transmission and reception may be configured to a symbol configured as DL or UL by a slot pattern.

Furthermore, it has been studied that the number of an active BWP that is a processing target BWP of the UE among a plurality of BWPs is one. In this case, the UE processes only one BWP at a certain moment. Furthermore, it has been studied to concurrently configure to the UEs a plurality of active BWPs having different numerologies between wideband UEs of a single carrier. In this case, the UE processes a plurality of BWPs at a certain moment.

Furthermore, a case where the number of processing target active BWPs of the UE is one and, in addition, a case where a plurality of active BWPs including different numerologies between the wide band UEs of a single carrier are concurrently configured to the UEs have been studied.

However, how to interpret the SFI when a plurality of BWPs are configured to the UE, and how to interpret the SFI for other BWPs and/or slots are not determined.

Hence, the inventors of this application have studied a method where, when a BWP is configured to the UE, the UE determines a type of each symbol of a specific BWP and a specific slot based on SFI, and have conceived the present invention.

One embodiment of the present invention will be described in detail below with reference to the drawings.

A case where the numerology is a subcarrier spacing will be described. However, the numerologies may be a symbol length, the number of symbols in a slot or a cyclic prefix length.

### (First Embodiment)

In the first embodiment, a UE interprets SFI for different BWPs of an identical slot.

### <Option 1>

According to the option 1, the SFI is instructed per CC. A plurality of BWPs in a CC are associated with one SFI. One group common PDCCH that carries the SFI is indicated.

The UE receives the one SFI on the group common PDCCH of one BWP of a plurality of BWPs, and determines slot patterns of a plurality of BWPs based on the one SFI. An interpretation of the SFI in a plurality of BWPs is identical.

### <<Option 1-1>>

When numerologies of a plurality of BWPs are identical, an interpretation of the SFI may be identical between a plurality of BWPs. In this case, a type associated with the same time domain is equal between a plurality of BWPs.

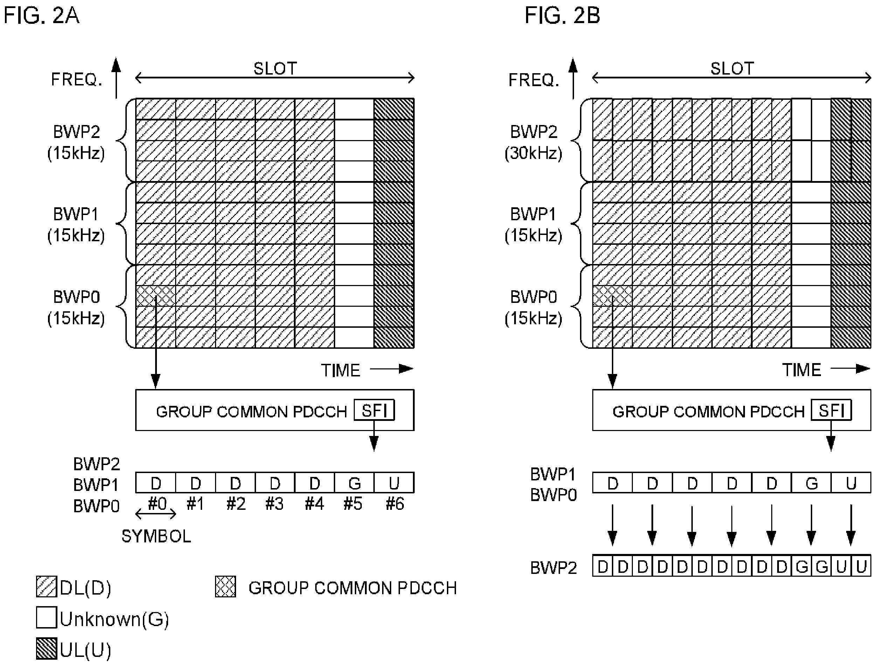

When, for example, the numerology (Subcarrier Spacing: SCS) of each of a BWP 0, a BWP 1 and a BWP 2 is 15 kHz as illustrated in Fig. 2A, and the number of symbols in a slot is 7, one SFI is used to indicate slot patterns of a plurality of BWPs. In this case, an interpretation of the SFI for all BWPs is identical. That is, a slot pattern is {D, D, D, D, D, Unknown, U} for all BWPs.

According to the above option 1-1, the UE can determine the identical slot pattern for a plurality of BWPs based on one SFI. By, for example, aligning transmission directions between a plurality of BWPs, it is possible to prevent an inter-BWP interference. Furthermore, it is possible to suppress a notification overhead (information amount) of the SFI.

### <<Option 1-2>>

When numerologies of a plurality of BWPs are different, a reference numerology may be configured, and slot patterns of different numerologies may be determined according to a slot pattern of the reference numerology.

The UE receives one SFI on a group common PDCCH of one BWP to which the reference numerology has been configured, and determines slot patterns of a plurality of numerologies (BWPs) based on the one SFI. An interpretation of the SFI is identical between a plurality of numerologies. That is, the UE determines the slot pattern of the reference numerology based on the SFI, and determines slot patterns of other numerologies based on the slot pattern of the reference numerology.

For example, it is assumed that, as illustrated in Fig. 2B, numerologies of the BWP 0 and BWP 1 are 15 kHz, and a numerology of the BWP 2 is 30 kHz, and 15 kHz is the reference numerology. One SFI is used to indicate a slot pattern. That is, the SFI indicates the slot pattern for an SCS of 15 kHz. In this example, a slot pattern interpreted from the SFI for the SCS of 15 kHz is {D, D, D, D, D, Unknown, U}. A slot pattern for an SCS of 30 kHz is determined based on an interpretation of a slot pattern of 15 kHz.

For example, 1 symbol in the SCS of 15 kHz corresponds to 2 symbols in the SCS of 30 kHz. Therefore, by converting "D" into "D, D", "Unknown" into "Unknown, Unknown" and "U" into "U, U" in the slot pattern for the SCS of 15 kHz, a slot pattern for the SCS of 30 kHz is determined. A type associated with the same time domain is equal between the slot pattern of the reference numerology and the slot pattern of the converted numerology. That is, the duration of Unknown or the guard period is also equal between the slot pattern of the reference numerology and the slot pattern of the converted slot numerology.

According to the above option 1-2, the UE can determine a slot pattern having an identical transmission direction in the same time domain for different numerologies and/or different BWPs. By aligning the transmission directions between a plurality of BWPs having different numerologies, it is possible to suppress an interference. Furthermore, it is possible to suppress a notification overhead (information amount) of the SFI.

According to the above option 1, one SFI is notified for a plurality of BWPs from a radio base station to the UE, so that it is possible to suppress a notification overhead (information amount) of the SFI.

### <Option 2>

According to the option 2, an SFI is instructed per BWP. Slot patterns of different BWPs may differ.

### <<Option 2-1>>

According to the option 2-1, a plurality of BWPs are associated with one SFI. An interpretation of the SFI depends on the BWP. One group common PDCCH that carries the SFI is indicated.

The UE receives the one SFI on a group common PDCCH of one BWP of a plurality of BWPs, and determines slot patterns of a plurality of BWPs based on the one SFI. An interpretation of the SFI differs between a plurality of BWPs.

A table may define mapping between SFI values for different BWPs and slot patterns. An SFI value is a value of the SFI (a bit sequence or an index), and the table indicates a plurality of SFI values that can be taken.

Choice 1: The slot patterns in the table are defined in advance.

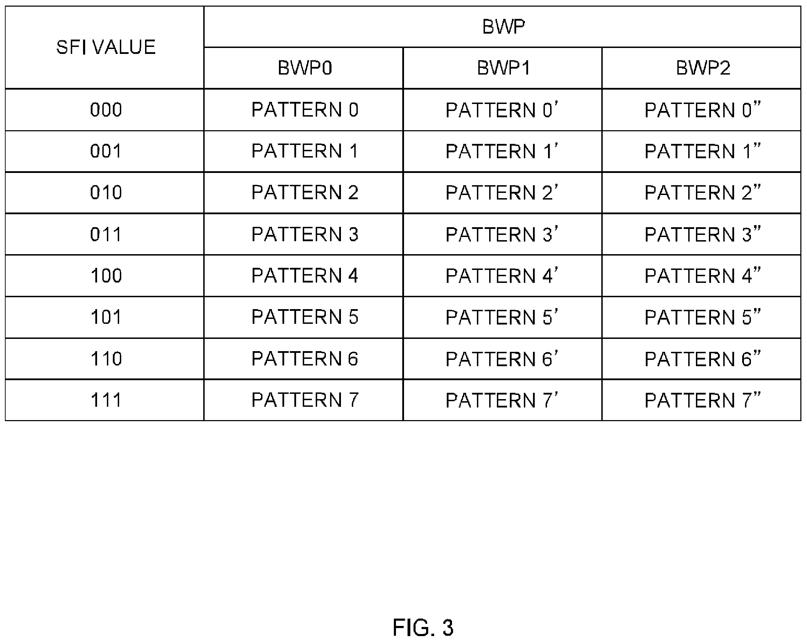

For example, a table illustrated in Fig. 3 is defined in advance. The table may be defined in a specification. The table may indicate a slot pattern per BWP or per SFI value. The table may indicate a slot pattern by a slot pattern index indicating one of a plurality of slot patterns defined in advance.

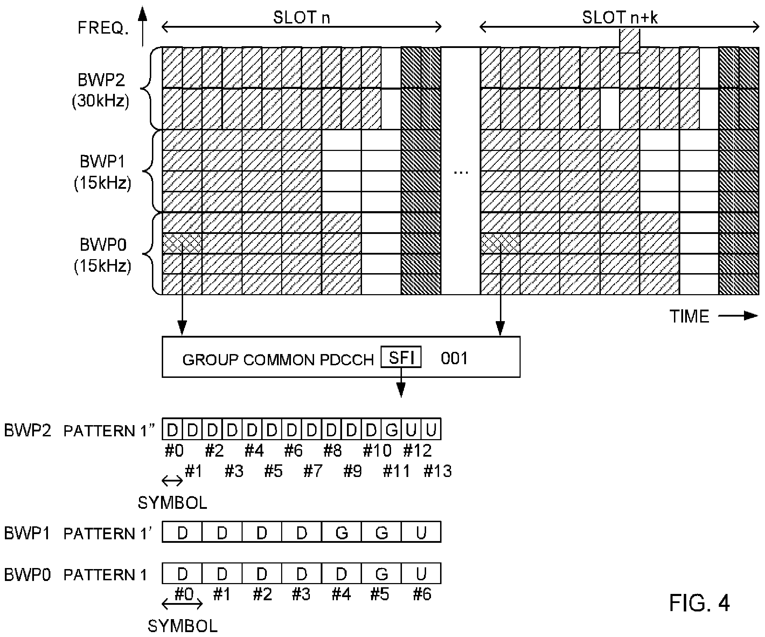

As illustrated in, for example, Fig. 4, the BWP 0 and the BWP 1 are configured to a 15 kHz SCS, and the BWP 2 is configured to a 30 kHz SCS. One SFI is used to indicate a slot pattern.

The UE receives the SFI on one group common PDCCH in a slot n of the BWP 0, and receives the SFI on one group common PDCCH in a slot n+k of the BWP 0.

Based on the table, the UE interprets the slot pattern of the BWP 0 as a pattern 1 {D, D, D, D, D, Unknown, U} associated with the BWP 0 and an SFI value 001, interprets the slot pattern of the BWP 1 as a pattern 1' {D, D, D, D, Unknown, Unknown, U} associated with the BWP 1 and the SFI value 001, and interprets the slot pattern of the BWP 2 as a pattern 1" {D, D, D, D, D, D, D, D, D, D, D, Unknown, U, U} associated with the BWP 0 and the SFI value 001.

While symbols #5 of the BWP 0 and the BWP 1 are {Unknown}, symbols #10 and #11 of the BWP 2 associated with this time resource are {D, Unknown}. That is, a time duration of the Unknown resource of the BWP 2 is half of a time duration of the Unknown resources of the BWPs 0 and 1. According to this slot pattern, it is possible to reduce an unnecessary Unknown resource of the BWP 2.

Each slot pattern in the table and the SFI value do not change between the slots n and n+k, and therefore the slot pattern of each BWP does not change, either.

Choice 2; The slot patterns in the table are configured by higher layer signaling (e.g., Radio Resource Control (RRC)) signaling.

For example, the table illustrated in Fig. 3 is configured to the UE by higher layer signaling.

For example, a plurality of tables may be defined in advance, and higher layer signaling may configure which table is used for which slot, notify that another table is used from the slot n+k, and notify that another slot pattern is used for a specific SFI value from the slot n+k. More specifically, higher layer signaling for configuring a slot pattern may include at least one of a slot index indicating a slot pattern update timing, an updated table index, an update target SFI value, a BWP index indicating an update target BWP, an updated slot pattern, and a slot pattern index indicating the updated slot pattern of a plurality of slot patterns defined in advance. According to this configuration, the slot patterns are associated with slot indices.

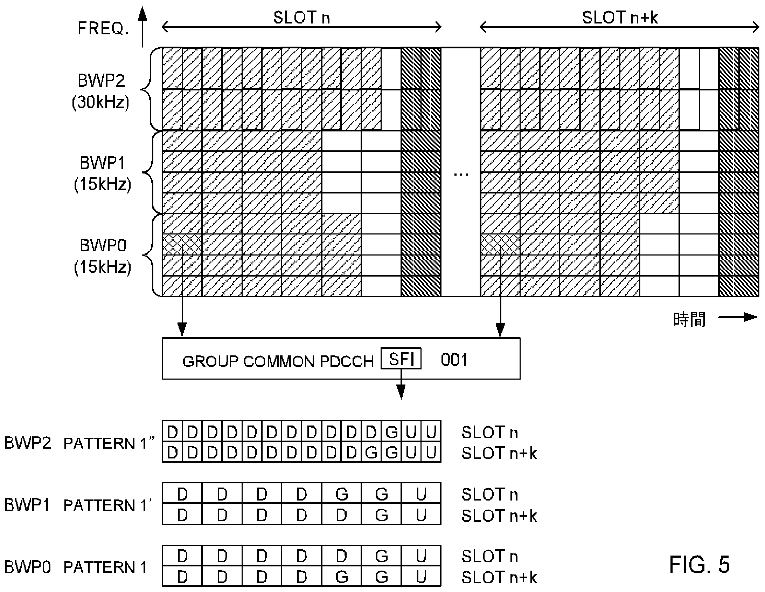

As illustrated in, for example, Fig. 5, the BWP 0 and the BWP 1 are configured to the 15 kHz SCS, the BWP 2 is configured to the 30 kHz SCS, and one SFI is used to instruct a slot pattern.

The UE receives SFI on one group common PDCCH of the slot n of the BWP 0, and receives SFI on one group common PDCCH of the slot n+k of the BWP 0.

Slot patterns configured by higher layer signaling differ between the slots n and n+k.

According to the choice 2, it is possible to reserve a guard period to adjust the guard period between a plurality of numerologies in a specific slot, and change a slot pattern by, for example, reducing the guard period as much as possible in other slots. Consequently, it is possible to flexibly control, for example, reduction of an interference and improvement of a throughput according to a situation.

According to the above option 2-1, one SFI is notified for a plurality of BWPs from the radio base station to the UE, so that it is possible to configure a different slot pattern per BWP while suppressing a notification overhead (information amount) of the SFI. By, for example, configuring a shorter time duration of Unknown of a BWP to which a larger SCS has been configured than a time duration of Unknown of a BWP to which a smaller SCS has been configured, it is possible to increase schedulable resources, and improve a throughput.

### <<Option 2-2>>

According to the option 2-2, a plurality of BWPs are associated with a plurality of pieces of SFI. Each BWP is associated with one SFI. The number of group common PDCCHs that carry the SFI is indicated.

Slot patterns for different BWPs are indicated by the associated SFI. The UE interprets a slot pattern based on the SFI for each BWP.

### Choice 1: One group common PDCCH that carries SFI is indicated.

The UE receives a plurality of pieces of SFI on the group common PDCCH of one BWP of a plurality of BWPs, and determines a slot pattern of the associated BWP based on each SFI.

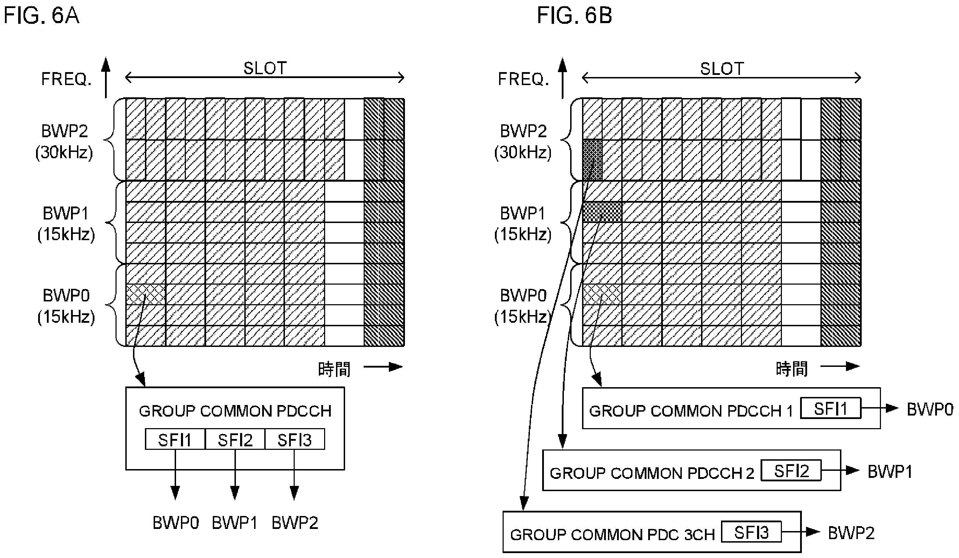

As illustrated in Fig. 6A, the group common PDCCH includes a plurality of SFI fields. Each SFI field carries one SFI associated with a specific BWP.

### Choice 2: A plurality of group common PDCCHs that carry SFI are indicated.

The UE receives the SFI on the group common PDCCH of each of a plurality of BWPs, and determines a slot pattern of an associated BWP based on each SFI.

As illustrated in Fig. 6B, each group common PDCCH is associated with a specific BWP. In this case, the UE can concurrently process a plurality of active BWPs.

According to the above option 2-2, it is possible to dynamically configure a slot pattern to each BWP, and more flexibly control, for example, reduction of an interference and improvement of a throughput according to a situation.

According to the above option 2, the UE can configure slot patterns for a plurality of BWPs based on the SFI.

### <Option 3>

According to the option 3, SFI is instructed per numerology. Slot patterns of different numerologies may differ. In addition, when BWPs are associated with the numerologies, one of the options 2 and 3 may be used.

### <<Option 3-1>>

According to the option 3-1, a plurality of BWPs are associated with one SFI. An interpretation of the SFI depends on a numerology configured to a BWP. One group common PDCCH that carries the SFI is indicated.

The UE receives the one SFI on a group common PDCCH of one BWP of a plurality of BWPs, and determines slot patterns of a plurality of numerologies based on the one SFI. An interpretation of the SFI differs between a plurality of numerologies.

A table may define mapping between SFI values for the different numerologies and the slot patterns.

Choice 1: The slot patterns in the table are defined in advance.

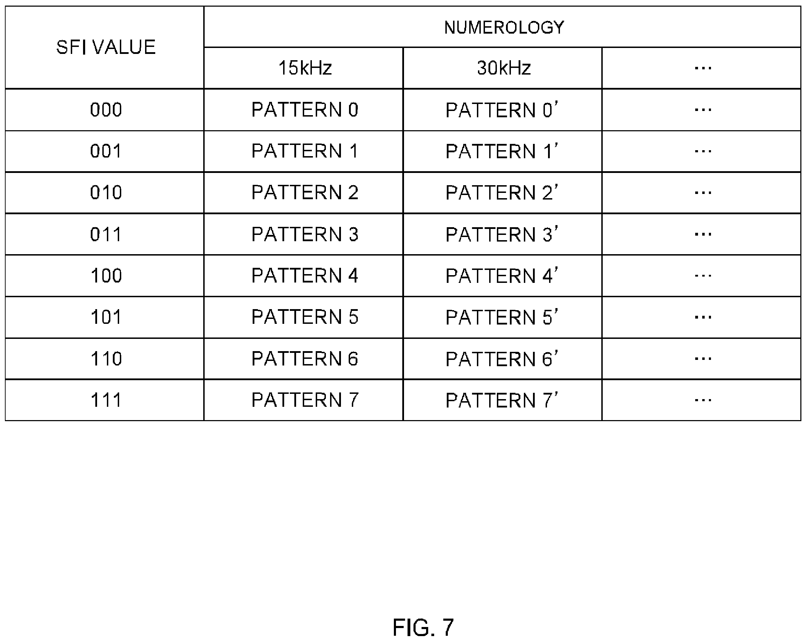

For example, the table illustrated in Fig. 7 is defined in advance. The table may be defined in a specification. The table indicates the slot patterns per numerology or per SFI value. The table may indicate the slot patterns by a slot pattern index indicating one of a plurality of slot patterns defined in advance.

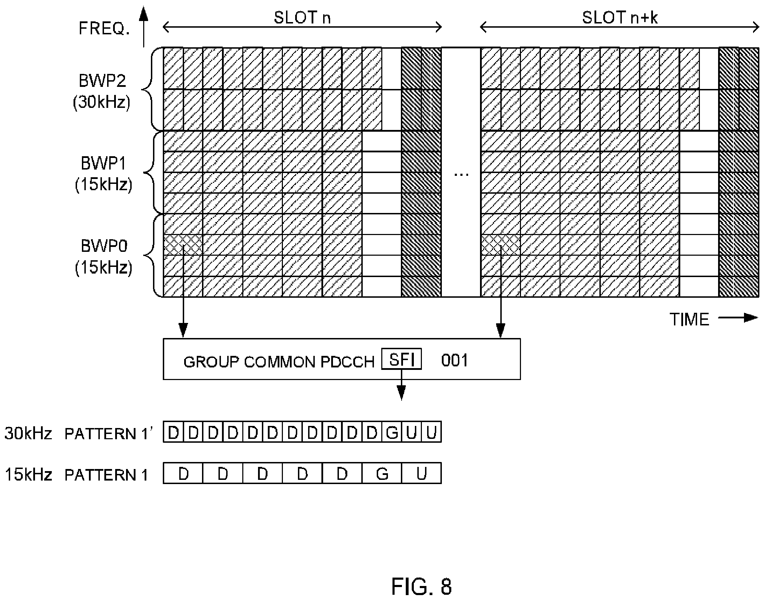

As illustrated in, for example, Fig. 8, the BWP 0 and the BWP 1 are configured to the 15 kHz SCS, the BWP 2 is configured to the 30 kHz SCS, and one SFI is used to instruct a slot pattern.

The UE receives SFI on one group common PDCCH in the slot n of the BWP 0, and receives SFI on one group common PDCCH in the slot n+k of the BWP 0.

Based on the table, the UE interprets the slot patterns of the BWP 0 and the BWP 1 to which the SCS of the 15 kHz has been configured as the pattern 1 {D, D, D, D, D, Unknown, U} associated with 15 kHz and the SFI value 001, and interprets the slot pattern of the BWP 2 to which the SCS of 30 kHz has been configured as the pattern 1' {D, D, D, D, D, D, D, D, D, D, D, Unknown, U, U} associated with 30 kHz and the SFI value 001.

While the symbols #5 of the BWP 0 and the BWP 1 are {Unknown}, the symbols #10 and #11 of the BWP 2 associated with this time resource are {D, Unknown}. That is, the time duration of the Unknown resource of the BWP 2 is half of the time duration of the Unknown resources of the BWPs 0 and 1. According to this slot pattern, it is possible to reduce an unnecessary Unknown resource of the BWP 2.

Each slot pattern in the table and the SFI value do not change between the slots n and n+k, and therefore the slot pattern of each BWP does not change, either.

Choice 2: Slot patterns in the table are configured by higher layer (e.g., Radio Resource Control (RRC)) signaling.

For example, a plurality of tables may be defined in advance, and higher layer signaling may configure which table is used for which slot, notify that another table is used from the slot n+k, and notify that another slot pattern is used for a specific SFI value from the slot n+k. More specifically, higher layer signaling for configuring a slot pattern may include at least one of a slot index indicating a slot pattern update timing, an updated table index, an update target SFI value, a numerology index indicating an update target numerology, an updated slot pattern, and a slot pattern index indicating the updated slot pattern of a plurality of slot patterns defined in advance. According to this configuration, the slot patterns are associated with slot indices.

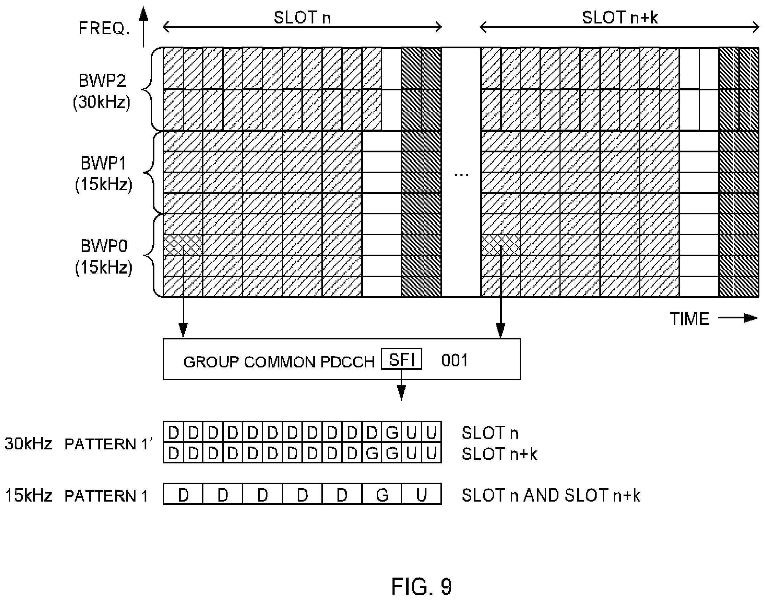

As illustrated in, for example, Fig. 9, the BWP 0 and the BWP 1 are configured to the 15 kHz SCS, the BWP 2 is configured to the 30 kHz SCS, and one SFI is used to instruct a slot pattern.

The UE receives SFI on one group common PDCCH of the slot n of the BWP 0, and receives SFI on one group common PDCCH of the slot n+k of the BWP 0.

Slot patterns configured by higher layer signaling differ between the slots n and n+k.

According to the choice 2, it is possible to reserve a guard period to adjust the guard period between a plurality of numerologies in a specific slot, and change a slot pattern by, for example, reducing the guard period as much as possible in other slots. Consequently, it is possible to flexibly control, for example, reduction of an interference and improvement of a throughput according to a situation.

According to the above option 3-1, one SFI is notified for a plurality of BWPs from the radio base station to the UE, so that it is possible to configure a different slot pattern per BWP while suppressing a notification overhead (information amount) of the SFI. By, for example, configuring a shorter time duration of Unknown of a BWP to which a larger SCS has been configured than a time duration of Unknown of a BWP to which a smaller SCS has been configured, it is possible to increase schedulable resources, and improve a throughput.

### <<Option 3-2>>

According to the option 3-2, a plurality of numerologies are associated with a plurality of pieces of SFI. Each numerology is associated with one SFI. The number of group common PDCCHs that carry the SFI is indicated.

Slot patterns for different numerologies are indicated by the associated SFI. The UE interprets a slot pattern based on the SFI for each numerology.

Choice 1: One group common PDCCH that carries SFI is indicated.

The UE receives a plurality of pieces of SFI on the group common PDCCH of one BWP of a plurality of BWPs, and determines a slot pattern of an associated numerology based on each SFI.

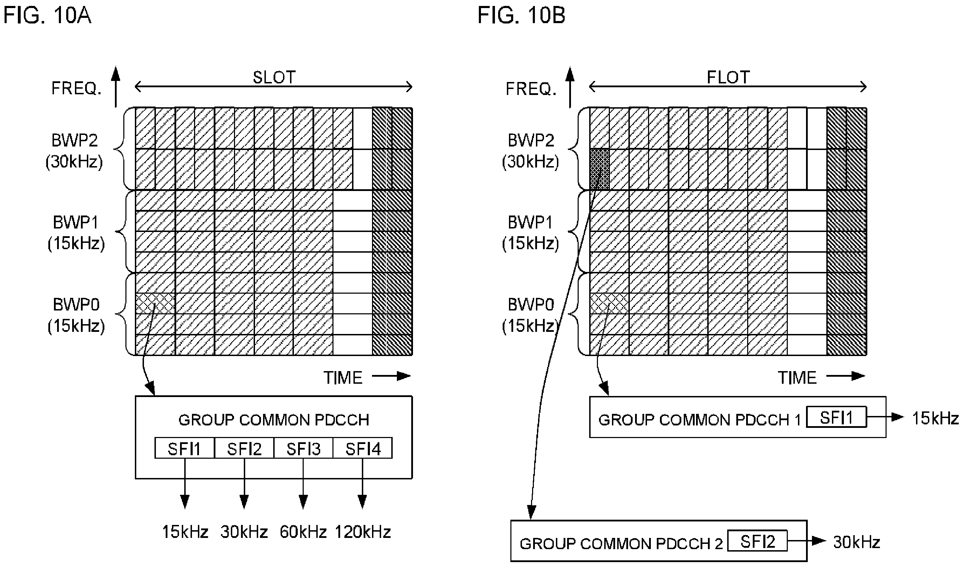

As illustrated in Fig. 10A, the group common PDCCH includes a plurality of SFI fields. Each SFI field carries one SFI associated with a specific numerology.

Choice 2: A plurality of group common PDCCHs that carry SFI are indicated.

The UE receives the SFI on the group common PDCCH of each of a plurality of BWPs, and determines a slot pattern of an associated numerology based on each SFI.

As illustrated in Fig. 10B, each group common PDCCH is associated with a specific numerology. In this case, the UE can process a plurality of active BWPs.

According to the above option 3-2, it is possible to dynamically configure a slot pattern to each numerology, and more flexibly control, for example, reduction of an interference and improvement of a throughput according to a situation.

According to the above option 3, the UE can configure the slot patterns for a plurality of numerologies based on the SFI.

According to the above first embodiment, when a plurality of BWPs are configured, the UE can determine slot patterns for an identical BWP and/or different BWPs based on SFI received in a certain BWP.

### (Second Embodiment)

According to the second embodiment, a UE interprets SFI for different slots.

SFI is instructed for a slot in which the SFI has been received, and slots having different numerologies from a numerology of a BWP.

A case where the SFI instructs a slot pattern of a different slot may be referred to as cross slot SFI. A case where SFI instructs a slot pattern of another slot in addition to an SFI slot may be referred to as a multi-slot SFI.

### <Option 1>

According to the option 1, a plurality of numerologies are associated with one SFI. Different numerologies may be configured to different slots of the same BWP, or different numerologies may be configured to different slots of different BWPs. One group common PDCCH that carries SFI is indicated.

### <<Option 1-1>>

Although SFI is identical between a plurality of slots, an interpretation of the SFI may differ between configured numerologies.

The UE receives one SFI on a group common PDCCH of one BWP, and determines slot patterns of a plurality of numerologies (slots and/or BWPs) based on one SFI. An interpretation of SFI differs between a plurality of numerologies.

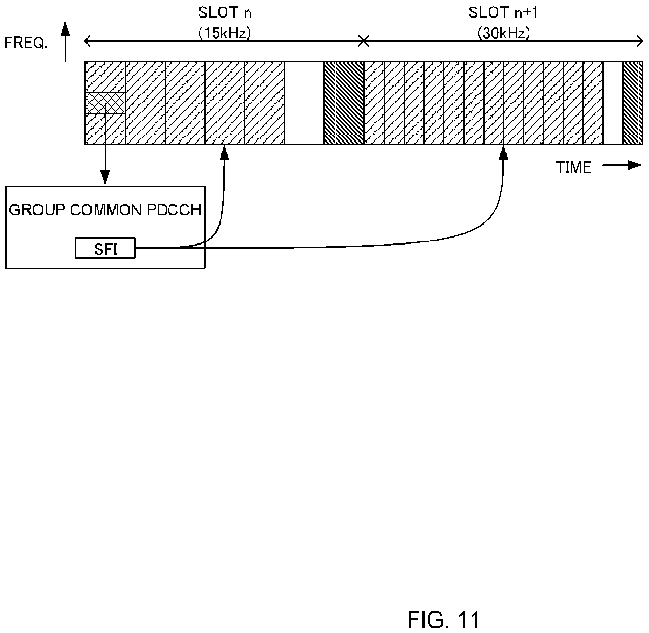

As illustrated in, for example, Fig. 11, a slot n is configured to an SCS of 15 kHz, and a slot n+1 is configured to an SCS of 30 kHz. SFI on the slot n indicates slot patterns of the slot n and the slot n+1. Assuming that the SFI value is 001, the UE interprets the slot n as a slot pattern {D, D, D, D, D, Unknown, U}, and the slot n+1 as a slot pattern {D, D, D, D, D, D, D, D, D, D, D, Unknown, U, U} based on an SFI value.

A mapping relationship between the SFI value and slot patterns of different numerologies may be defined in advance, or may be configured by higher layering.

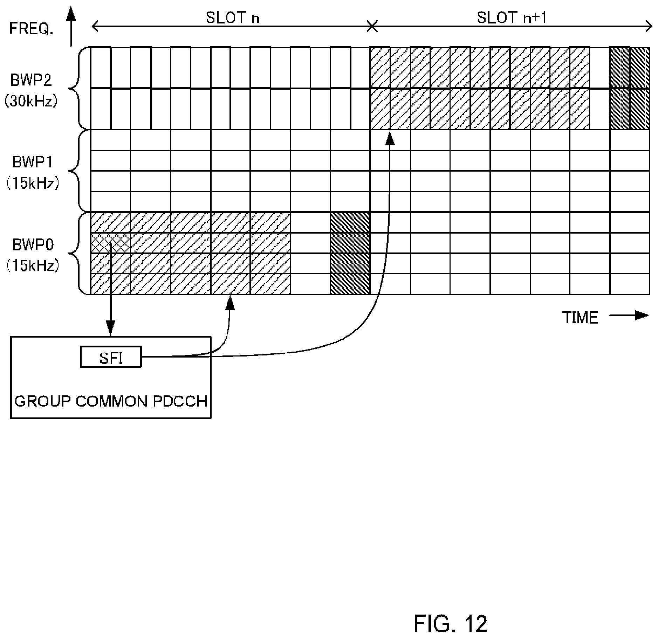

As illustrated in Fig. 12, the SFI instructs that different BWPs may not overlap over a plurality of slots having different BWPs in a frequency domain. In an example in Fig. 12, the SFI carried on the group common PDCCH in the BWP 0 of the slot n indicates the slot pattern of the BWP 0 of the slot n, and the slot pattern of the BWP 2 of the slot n+1. The BWP 0 and the BWP 2 do not overlap in the frequency domain.

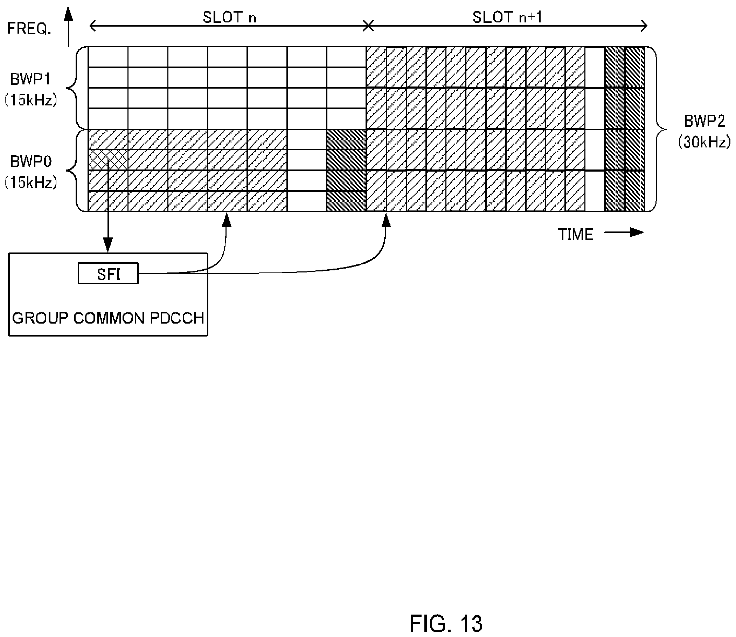

As illustrated in Fig. 13, the SFI instructs that different BWPs may overlap a plurality of slots having different BWPs in the frequency domain and may not overlap a plurality of slots in the time domain. In an example in Fig. 13, the SFI carried on the group common PDCCH in the BWP 0 of the slot n indicates the slot pattern of the BWP 0 of the slot n, and the slot pattern of the BWP 2 of the slot n+1. The BWP 0 and the BWP 2 overlap in the frequency domain, and do not overlap in the time domain.

According to the above option 1-1, it is possible to determine different slot patterns for different numerologies based on one SFI. Consequently, it is possible to suppress a notification overhead (information amount) of the SFI. Furthermore, by, for example, configuring a shorter time duration of Unknown of a slot and/or a BWP to which a larger SCS has been configured than a time duration of Unknown of a slot and/or a BWP to which a smaller SCS has been configured, it is possible to increase schedulable resources, and improve a throughput.

### <<Option 1-2>>

When numerologies of a plurality of BWPs are different, a reference numerology may be configured, and slot patterns of different numerologies may be determined according to a slot pattern of the reference numerology.

The UE receives one SFI on a group common PDCCH of one BWP, and determines slot patterns of a plurality of numerologies (slots and/or BWPs) based on the one SFI. An interpretation of SFI is identical between a plurality of numerologies. That is, the UE determines the slot pattern of the reference numerology based on the SFI, and determines slot patterns of other numerologies based on the slot pattern of the reference numerology.

Although the SFI is instructed for a plurality of numerologies, the slot pattern is based on the reference numerology. By converting the slot pattern of the reference numerology into a slot pattern of another numerology, a type associated with the same time domain is equal between the slot pattern of the reference numerology and the slot pattern of the converted numerology. That is, a duration of Unknown and a guard period is also equal between the slot pattern of the reference numerology and the slot pattern of the converted numerology.

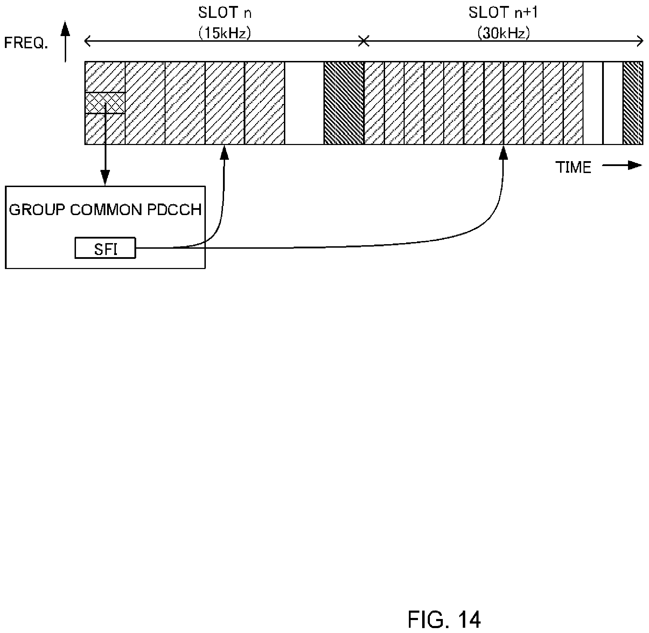

As illustrated in, for example, Fig. 14, in a certain BWP, an SCS of 15 kHz is configured to the slot n, an SCS of 30 kHz is configured to the slot n+1, and the reference numerology is defined as 15 kHz.

The SFI indicates the slot pattern of the slot n to which the reference numerology has been configured, and the UE determines the slot pattern of the slot n+1 based on the slot pattern of the slot n.

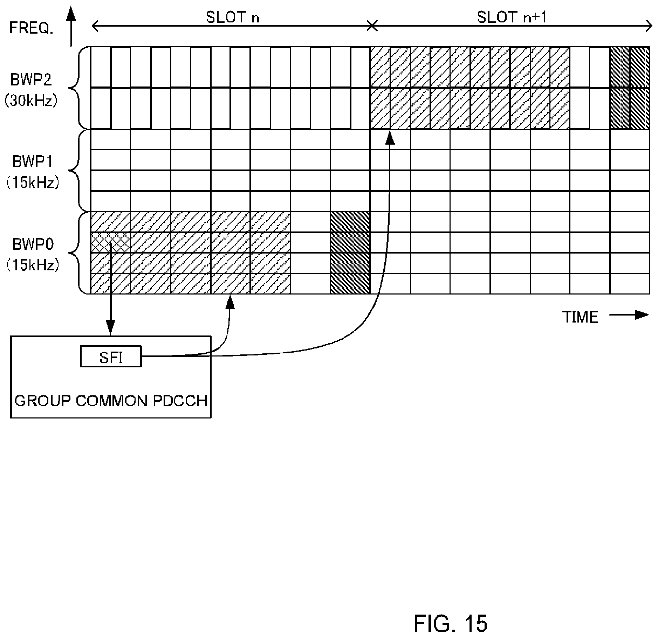

As illustrated in, for example, Fig. 15, the SCS of 15 kHz is configured to the BWP 0, the SCS of 15 kHz is configured to the BWP 1, the SCS of 30 kHz is configured to the BWP 2, and the reference numerology is defined as 15 kHz. The BWP 0, the BWP 1 and the BWP 2 do not overlap in the frequency domain.

The SFI in the BWP 0 of the slot n indicates the slot pattern of the BWP 0 of the slot n to which the reference numerology has been configured, and the UE determines the slot pattern of the BWP 2 of the slot n+1 based on the slot pattern of the BWP 0 of the slot n.

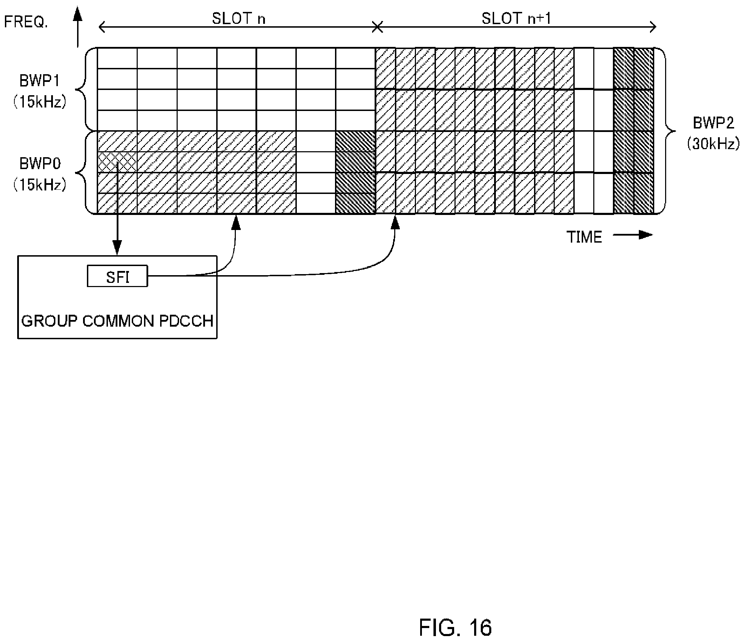

As illustrated in, for example, Fig. 16, the SCS of 15 kHz is configured to the BWP 0 of the slot n, the SCS of 15 kHz is configured to the BWP 1 of the slot n, the SCS of 30 kHz is configured to the BWP 2 of the slot n+1, and the reference numerology is defined as 15 kHz. Although the BWP 2 overlaps the BWP 0 and the BWP 1 in the frequency domain, the BWP 2 does not overlap the BWP 0 and the BWP 1 in the time domain.

The SFI in the BWP 0 of the slot n indicates the slot pattern of the BWP 0 of the slot n to which the reference numerology has been configured, and the UE determines the slot pattern of the BWP 2 of the slot n+1 based on the slot pattern of the BWP 0 of the slot n.

According to the above option 1-2, the UE can determine slot patterns having the identical transmission directions in the same time domain for different numerologies.

According to the above option 1, one SFI is notified for a plurality of slots from the radio base station to the UE, so that it is possible to suppress a notification overhead (information amount) of the SFI. Furthermore, it is possible to determine slot patterns for slots different from a slot in which the group common PDCCH has been received.

### <Option 2>

According to the option 2, SFI is instructed per numerology. Slot patterns of different BWPs may differ. The number of group common PDCCHs that carry the SFI is indicated.

A plurality of numerologies are associated with a plurality of pieces of SFI. Each numerology is associated with one SFI. The UE interprets a slot pattern based on the SFI for each numerology.

Choice 1: One group common PDCCH that carries SFI is indicated.

The UE receives a plurality of pieces of SFI on one group common PDCCH, and determines a slot pattern of an associated numerology based on each SFI.

The group common PDCCH that carries the SFI includes a plurality of SFI fields. Each SFI field carries one SFI associated with a specific numerology.

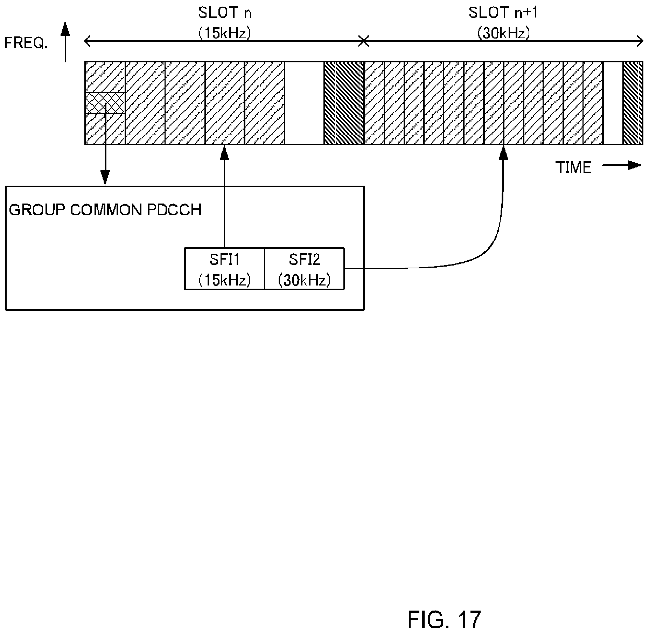

As illustrated in, for example, Fig. 17, the SCS of 15 kHz is configured to the slot n, the SCS of 30 kHz is configured to the slot n+1, and SFI on the slot n indicates slot patterns of the slot n and the slot n+1. This SFI includes SFI 1 and SFI 2 as SFI fields. The SFI in the SFI 1 indicates the slot pattern of the slot n, and the SFI in the SFI 2 indicates the slot pattern of the slot n+1.

Choice 2: A plurality of group common PDCCHs that carry SFI are indicated.

The UE receives the SFI on each of a plurality of group common PDCCHs, and determines a slot pattern of an associated BWP based on each SFI. Each group common PDCCH is associated with a specific numerology.

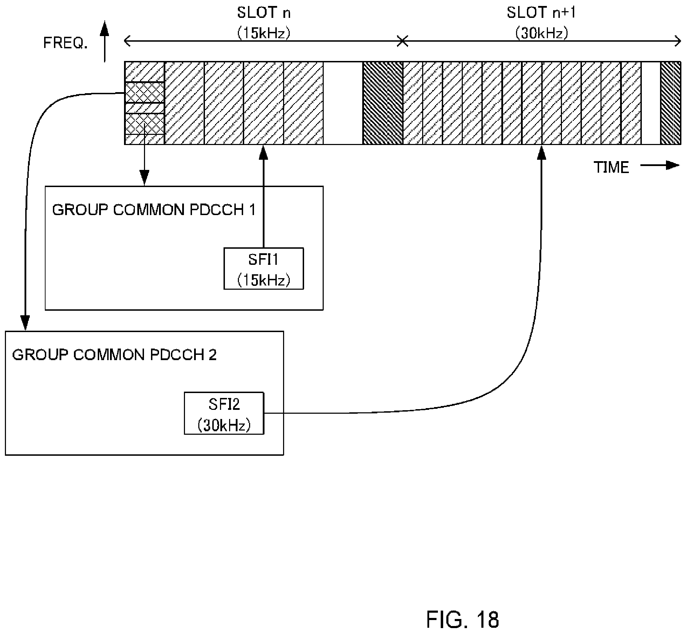

As illustrated in, for example, Fig. 18, the SCS of 15 kHz is configured to the slot n, the SCS of 30 kHz is configured to the slot n+1, and the SFI on the slot n indicates the slot patterns of the slot n and the slot n+1. A GC-PDCCH 1 and a GC-PDCCH 2 are transmitted as group common PDCCHs in the slot n.

The SFI 1 for the SCS of 15 kHz is carried on the GC-PDCCH 1. The SFI in the SFI 1 indicates the slot pattern of the slot n associated with the SCS of 15 kHz. The SFI 2 for the SCS of 30 kHz is carried on the GC-PDCCH 2. The SFI in the SFI 2 indicates the slot pattern of the slot n+1 associated with the SCS of 30 kHz.

According to the above option 2, when different numerologies are configured to different slots, the UE can determine a different slot pattern per numerology based on the SFI per numerology. Furthermore, it is possible to dynamically configure a slot pattern to each slot and/or each BWP and, consequently more flexibly control, for example, reduction of an interference and improvement of a throughput according to a situation.

According to the above second embodiment, when different numerologies are configured to different slots, the UE can determine slot patterns for an identical slot and/or different slots based on SFI of a certain slot.

### (Radio Communication System)

The configuration of the radio communication system according to the present embodiment will be described below. This radio communication system is applied the radio communication method according to each of the above embodiments. In addition, the radio communication method according to each of the above embodiments may be applied alone or may be applied in combination.

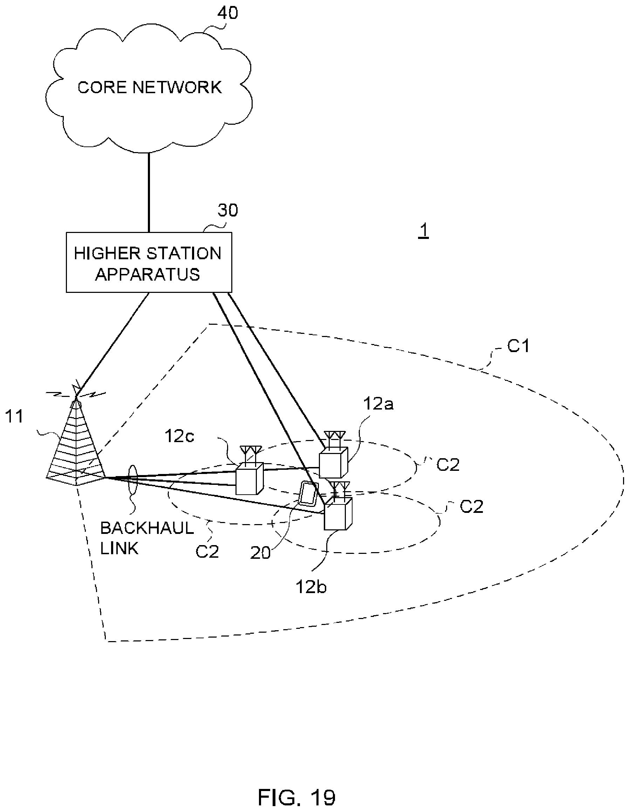

Fig. 19 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose one unit is a system bandwidth (e.g., 20 MHz) of the LTE system. In this regard, the radio communication system 1 may be referred to as SUPER 3G, LTE-Advanced (LTE-A), IMT-Advanced, 4G, 5G, Future Radio Access (FRA) and New RAT (NR).

The radio communication system 1 illustrated in Fig. 19 includes a radio base station 11 that forms a macro cell C1, and radio base stations 12a to 12c that are located in the macro cell C1 and form small cells C2 narrower than the macro cell C1. Furthermore, a user terminal 20 is located in the macro cell C1 and each small cell C2. Different numerologies may be configured to be applied between cells. In addition, the numerology may be at least one of a subcarrier spacing, a symbol length, a Cyclic Prefix (CP) length, the number of symbols per Transmission Time Interval (TTI), and a time duration of the TTI. Furthermore, the slot may be a time unit based on the numerology applied by the user terminal. The number of symbols per slot may be determined according to a subcarrier spacing.

The user terminal 20 can connect with both of the radio base station 11 and the radio base stations 12. The user terminal 20 is assumed to concurrently use the macro cell C1 and the small cells C2 that use different frequencies by CA or DC. Furthermore, the user terminal 20 can apply CA or DC by using a plurality of cells (CCs) (e.g., two CCs or more). Furthermore, the user terminal can use licensed band CCs and unlicensed band CCs as a plurality of cells.

Furthermore, the user terminal 20 can perform communication by using Time Division Duplex (TDD) or Frequency Division Duplex (FDD) in each cell (carrier). A TDD cell and an FDD cell may be each referred to as a TDD carrier (frame configuration second type) and an FDD carrier (frame configuration first type).

Furthermore, each cell (carrier) may be applied a slot (also referred to as a TTI, a general TTI, a long TTI, a general subframe, a long subframe or a subframe) having a relatively long time duration (e.g., 1 ms), and/or a slot (also referred to as a mini slot, a short TTI or a short subframe) having a relatively short time duration. Furthermore, each cell may be applied a slot of 2 or more time durations.

The user terminal 20 and the radio base station 11 can communicate by using a carrier (also referred to as a Legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz, 5 GHz or 30 to 70 GHz) or may use the same carrier as that used between the user terminal 20 and the radio base station 11. In this regard, a configuration of the frequency band used by each radio base station is not limited to this. Furthermore, one or more BWPs may be configured to the user terminal 20. The BWP is composed of at least part of a carrier.

The radio base station 11 and each radio base station 12 (or the two radio base stations 12) may be configured to be connected by way of wired connection (e.g., optical fibers compliant with a Common Public Radio Interface (CPRI) or an X2 interface) or by way of radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal but also a fixed communication terminal. Furthermore, the user terminal 20 can perform Device-to-Device communication (D2D) with the other user terminal 20.

The radio communication system 1 can apply Orthogonal Frequency-Division Multiple Access (OFDMA) to Downlink (DL), and can apply Single Carrier Frequency Division Multiple Access (SC-FDMA) to Uplink (UL) as radio access schemes. OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into a band including one or contiguous resource blocks per terminal and causes a plurality of terminals to use respectively different bands to reduce an inter-terminal interference. In this regard, uplink and downlink radio access schemes are not limited to a combination of these, and OFDMA may be used on UL. Furthermore, SC-FDMA is applicable to Sidelink (SL) used for device-to-device communication.

The radio communication system 1 uses a DL data channel (PDSCH: Physical Downlink Shared Channel that is also referred to as a DL shared channel) shared by each user terminal 20, a broadcast channel (PBCH: Physical Broadcast Channel) and an L1/L2 control channel as DL channels. DL data (at least one of user data, higher layer control information and System Information Blocks (SIBs)) is transmitted on the PDSCH. Furthermore, Master Information Blocks (MIBs) are transmitted on the PBCH.

The L1/L2 control channel includes a DL control channel (e.g., a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and the PUSCH is transmitted on the PDCCH. The number of OFDM symbols used for the PDCCH is transmitted on the PCFICH. The EPDCCH is subjected to frequency division multiplexing with the PDSCH and is used to transmit DCI similar to the PDCCH. Transmission acknowledgement information (A/N, HARQ-ACK, HARQ-ACK bits or an A/N codebook) of the PUSCH can be transmitted on the PHICH.

The radio communication system 1 uses a UL data channel (PUSCH: Physical Uplink Shared Channel that is also referred to as a UL shared channel) shared by each user terminal 20, a UL control channel (PUCCH: Physical Uplink Control Channel), and a random access channel (PRACH: Physical Random Access Channel) as UL channels. UL data (user data and/or higher layer control information) is transmitted on the PUSCH. Uplink Control Information (UCI) including at least one of transmission acknowledgement information (A/N or HARQ-ACK) and Channel State Information (CSI) of the PDSCH is transmitted on the PUSCH or the PUCCH. A random access preamble for establishing connection with a cell can transmitted on the PRACH.

### <Radio Base Station>

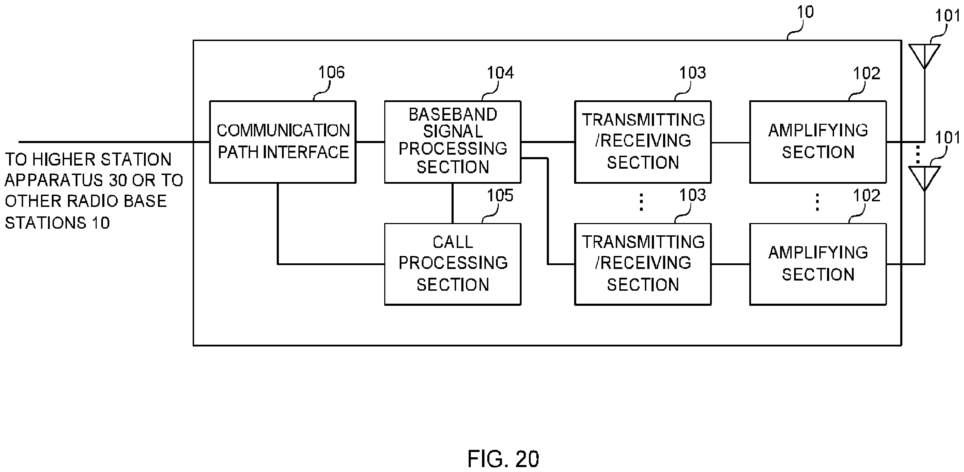

Fig. 20 is a diagram illustrating one example of an overall configuration of the radio base station according to the present embodiment. The radio base station 10 includes pluralities of transmission/reception antennas 101, amplifying sections 102 and transmission/reception sections 103, a baseband signal processing section 104, a call processing section 105 and a channel interface 106. In this regard, the radio base station 10 only needs to be configured to include one or more of each of the transmission/reception antennas 101, the amplifying sections 102 and the transmission/reception sections 103. The radio base station 10 may compose a "reception apparatus" on UL, and compose a "transmission apparatus" on DL.

User data transmitted from the radio base station 10 to the user terminal 20 on downlink is input from the higher station apparatus 30 to the baseband signal processing section 104 via the channel interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., Hybrid Automatic Repeat reQuest (HARQ) processing), and transmission processing such as at least one of scheduling, transmission format selection, channel coding, rate matching, scrambling, Inverse Fast Fourier Transform (IFFT) processing, and precoding processing on the user data, and transfers the user data to each transmission/reception section 103. Furthermore, the baseband signal processing section 104 performs transmission processing such as channel coding and/or inverse fast Fourier transform on a downlink control signal, too, and transfers the downlink control signal to each transmission/reception section 103.

Each transmission/reception section 103 converts a baseband signal precoded and output per antenna from the baseband signal processing section 104 into a radio frequency band, and transmits a radio frequency signal. The radio frequency signal subjected to frequency conversion by each transmission/reception section 103 is amplified by each amplifying section 102, and is transmitted from each transmission/reception antenna 101.

The transmission/reception sections 103 can be composed of transmitters/receivers, transmission/reception circuits or transmission/reception apparatuses described based on a common knowledge in a technical field according to the present invention. In this regard, the transmission/reception sections 103 may be composed as an integrated transmission/reception section or may be composed of transmission sections and reception sections.

Meanwhile, each amplifying section 102 amplifies a radio frequency signal received by each transmission/reception antenna 101 as a UL signal. Each transmission/reception section 103 receives the UL signal amplified by each amplifying section 102. Each transmission/reception section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, reception processing of MAC retransmission control, and reception processing of an RLC layer and a PDCP layer on UL data included in the input UL signal, and transfers the UL data to the higher station apparatus 30 via the channel interface 106. The call processing section 105 performs call processing such as a configuration and release of a communication channel, state management of the radio base station 10, and radio resource management.

The channel interface 106 transmits and receives signals to and from the higher station apparatus 30 via a given interface. Furthermore, the channel interface 106 may transmit and receive (backhaul signaling) signals to and from the neighboring radio base station 10 via an inter-base station interface (e.g., optical fibers compliant with the Common Public Radio Interface (CPRI) or the X2 interface).

Furthermore, each transmission/reception section 103 transmits a DL signal (at least one of, for example, a DL control signal (also referred to as a DL control channel or DCI), a DL data signal (also referred to as a DL data channel or DL data) and a reference signal). Furthermore, each transmission/reception section 103 receives a UL signal (at least one of, for example, a UL control signal (also referred to as a UL control signal or UCI), a UL data signal (also referred to as a UL data channel or UL data) and a reference signal).

Furthermore, each transmission/reception section 103 may transmit Slot Format related Information (SFI).

Furthermore, each transmission/reception section 103 may transmit information indicating an association with at least one of a pattern (e.g., slot pattern), a value of instruction information, a part frequency band (e.g., BWP), a numerology (e.g., SCS) and a slot by higher layer signaling (e.g., RRC signaling).

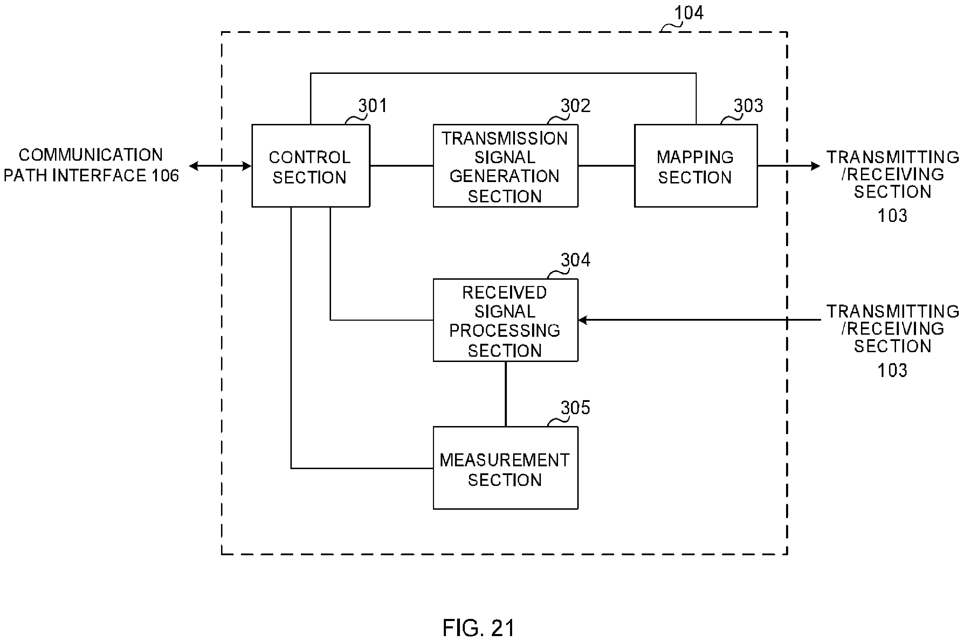

Fig. 21 is a diagram illustrating one example of a function configuration of the radio base station according to the present embodiment. In addition, Fig. 21 mainly illustrates function blocks of characteristic portions according to the present embodiment, and assumes that the radio base station 10 includes other function blocks, too, that are necessary for radio communication. As illustrated in Fig. 21, the baseband signal processing section 104 includes a control section 301, a transmission signal generating section 302, a mapping section 303, a received signal processing section 304 and a measurement section 305.

The control section 301 controls the entire radio base station 10. The control section 301 controls at least one of, for example, DL signal generation of the transmission signal generating section 302, DL signal mapping of the mapping section 303, UL signal reception processing (e.g., demodulation) of the received signal processing section 304 and measurement of the measurement section 305. Furthermore, the control section 301 may control scheduling of a data channel (including a DL data channel and/or a UL data channel).

The control section 301 may control a transmission direction of each symbol in a time unit (e.g., slot) that is a scheduling unit of the DL data channel. More specifically, the control section 301 may control generation and/or transmission of SFI indicating a DL symbol and/or a UL symbol in a slot.

Furthermore, the control section 301 may generate instruction information (e.g., SFI) based on information indicating an association with at least one of a pattern (e.g., slot pattern), a value of instruction information, a part frequency band (e.g., BWP), a numerology (e.g., SCS) and a slot.

The control section 301 can be composed of a controller, a control circuit or a control apparatus described based on the common knowledge in the technical field according to the present invention.

The transmission signal generating section 302 generates a DL signal (including at least one of DL data (channel), DCI, a DL reference signal, and control information of higher layer signaling) based on an instruction from the control section 301, and outputs the DL signal to the mapping section 303.

The transmission signal generating section 302 can be composed as a signal generator, a signal generating circuit or a signal generating apparatus described based on the common knowledge in the technical field according to the present invention.

The mapping section 303 maps the DL signal generated by the transmission signal generating section 302, on a given radio resource based on the instruction from the control section 301, and outputs the DL signal to each transmission/reception section 103. For example, the mapping section 303 maps the reference signal on a given radio resource by using an arrangement pattern determined by the control section 301.

The mapping section 303 can be composed as a mapper, a mapping circuit or a mapping apparatus described based on the common knowledge in the technical field according to the present invention.

The received signal processing section 304 performs reception processing (e.g., at least one of demapping, demodulation and decoding) on a UL signal transmitted from the user terminal 20. More specifically, the received signal processing section 304 outputs the received signal and/or the signal after the reception processing to the measurement section 305.

The received signal processing section 304 can be composed of a signal processor, a signal processing circuit or a signal processing apparatus described based on the common knowledge in the technical field according to the present invention. Furthermore, the received signal processing section 404 can compose the reception section according to the present invention.

The measurement section 305 may measure, for example, UL channel quality based on received power (e.g., Reference Signal Received Power (RSRP)) and/or received quality (e.g., Reference Signal Received Quality (RSRQ) of a reference signal. The measurement section 305 may output a measurement result to the control section 301.

### <User Terminal>

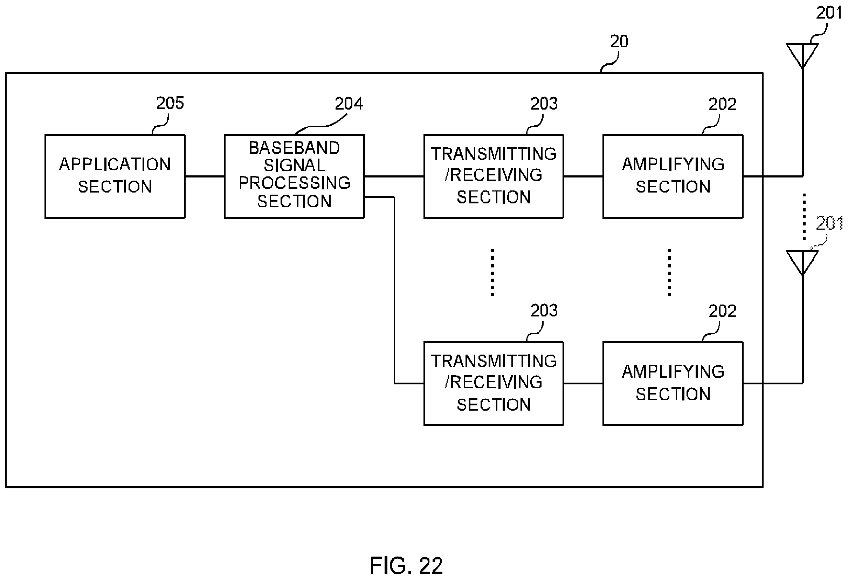

Fig. 22 is a diagram illustrating one example of an overall configuration of the user terminal according to the present embodiment. The user terminal 20 includes pluralities of transmission/reception antennas 201 for MIMO transmission, amplifying sections 202 and transmission/reception sections 203, a baseband signal processing section 204 and an application section 205. The user terminal 20 may compose a "transmission apparatus" on UL, and compose a "reception apparatus" on DL.

Each amplifying section 202 amplifies a radio frequency signal received at a plurality of transmission/reception antenna 201. Each transmission/reception section 203 receives a DL signal amplified by each amplifying section 202. Each transmission/reception section 203 performs frequency conversion on the received signal into a baseband signal, and outputs the baseband signal to the baseband signal processing section 204.

The baseband signal processing section 204 performs at least one of FFT processing, error correcting decoding, and reception processing of retransmission control on the input baseband signal. The baseband signal processing section 204 transfers DL data to the application section 205. The application section 205 performs processing related to layers higher than a physical layer and an MAC layer.

On the other hand, the application section 205 inputs UL data to the baseband signal processing section 204. The baseband signal processing section 204 performs at least one of retransmission control processing (e.g., HARQ processing), channel coding, rate matching, puncturing, Discrete Fourier Transform (DFT) processing and IFFT processing on the UL data, and transfers the UL data to each transmission/reception section 203. The baseband signal processing section 204 performs at least one of channel coding, rate matching, puncturing, DFT processing and IFFT processing on UCI (e.g., at least one of A/N of the DL signal, Channel State Information (CSI) and a Scheduling Request (SR)), too, and transfers the UCI to each transmission/reception section 203.

Each transmission/reception section 203 converts the baseband signal output from the baseband signal processing section 204 into a radio frequency band, and transmits a radio frequency signal. The radio frequency signal subjected to the frequency conversion by each transmission/reception section 203 is amplified by each amplifying section 202, and is transmitted from each transmission/reception antenna 201.

Furthermore, each transmission/reception section 203 receives the DL signal (e.g., at least one of a DL control signal (also referred to as a DL control channel or DCI), a DL data signal (also referred to as a DL data channel or DL data) and a reference signal). Furthermore, each transmission/reception section 203 transmits the UL signal (e.g., at least one of a UL control signal (also referred to as a UL control channel or UCI), a UL data signal (also referred to as a UL data channel or UL data) and a reference signal).

Furthermore, each transmission/reception section 203 may receive instruction information (e.g., SFI) for instructing a pattern (e.g., slot pattern) indicating a type (e.g., at least one of DL, UL and Unknown) of each symbol included in a slot on a downlink control channel (e.g., group common PDCCH).

Furthermore, each transmission/reception section 203 may receive information indicating an association with at least one of a pattern (e.g., slot pattern), a value of the instruction information, a part frequency band (e.g., BWP), a numerology (e.g., SCS) and a slot by higher layer signaling (e.g., RRC signaling).

The transmission/reception sections 203 can be composed as transmitters/receivers, transmission/reception circuits or transmission/reception apparatuses described based on the common knowledge in the technical field according to the present invention. Furthermore, the transmission/reception sections 203 may be composed as an integrated transmission/reception section or may be composed of transmission sections and reception sections.

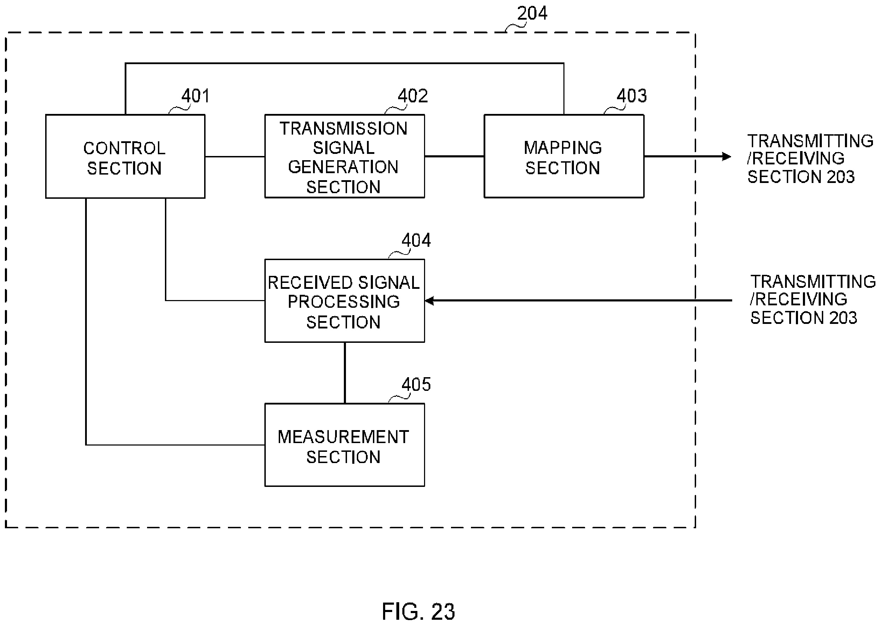

Fig. 23 is a diagram illustrating one example of a function configuration of the user terminal according to the present embodiment. In addition, Fig. 23 mainly illustrates function blocks of characteristic portions according to the present embodiment, and assumes that the user terminal 20 includes other function blocks, too, that are necessary for radio communication. As illustrated in Fig. 23, the baseband signal processing section 204 of the user terminal 20 includes a control section 401, a transmission signal generating section 402, a mapping section 403, a received signal processing section 404 and a measurement section 405.

The control section 401 controls the entire user terminal 20. The control section 401 controls at least one of, for example, UL signal generation of the transmission signal generating section 402, UL signal mapping of the mapping section 403, DL signal reception processing of the received signal processing section 404 and measurement of the measurement section 405.

More specifically, the control section 401 may control monitoring (blind decoding) of the DL control channel, and detection of DCI (including group common DCI and/or UE-specific DCI) for the user terminal 20. For example, the control section 401 may monitor one or more CORESETs configured to the user terminal 20.

Furthermore, the control section 401 may control a transmission direction of each symbol in a time unit (e.g., slot) that is a scheduling unit of the DL data channel.

Furthermore, the control section 401 does not need to assume reception of the DL signal and transmission of the UL signal on a given frequency resource (Unknown resource) of a given symbol in a slot determined based on the SFI.

Furthermore, the control section 401 may control transmission and reception based on a pattern instructed by instruction information. Furthermore, when a plurality of part frequency bands (e.g., BWPs) in a carrier frequency band (e.g., a CC or a system band) are configured, the control section 401 may determine a pattern for at least one part frequency band of a plurality of part frequency bands based on the instruction information.

Furthermore, the control section 401 may determine a plurality of patterns respectively associated with a plurality of frequency band parts and/or a plurality of numerologies based on one instruction information.

Furthermore, in a plurality of patterns, a type associated with the same time domain may not be equal.

Furthermore, each transmission/reception section 203 may receive a plurality of pieces of instruction information respectively associated with a plurality of frequency band parts and/or a plurality of numerologies, and the control section 401 may determine a pattern for each of a plurality of frequency band parts and/or a plurality of numerologies based on corresponding instruction information.

Furthermore, the control section 401 may determine patterns for slots different from a slot of the downlink control channel based on the instruction information.

The control section 401 can be composed of a controller, a control circuit or a control apparatus described based on the common knowledge in the technical field according to the present invention.

The transmission signal generating section 402 generates (e.g., encodes, rate-matches, punctures and modulates) retransmission control information of a UL signal and a DL signal based on an instruction from the control section 401, and outputs the retransmission control information to the mapping section 403. The transmission signal generating section 402 can be composed as a signal generator, a signal generating circuit or a signal generating apparatus described based on the common knowledge in the technical field according to the present invention.

The mapping section 403 maps the retransmission control information of the UL signal and the DL signal generated by the transmission signal generating section 402, on a radio resource based on the instruction from the control section 401, and outputs the retransmission control information to each transmission/reception section 203. For example, the mapping section 403 maps the reference signal on a given radio resource by using an arrangement pattern determined by the control section 401.

The mapping section 403 can be composed as a mapper, a mapping circuit or a mapping apparatus described based on the common knowledge in the technical field according to the present invention.

The received signal processing section 404 performs reception processing (e.g., at least one of demapping, demodulation and decoding) on the DL signal. For example, the received signal processing section 404 may demodulate the DL data channel by using the reference signal of the arrangement pattern determined by the control section 401.

Furthermore, the received signal processing section 404 may output the received signal and/or the signal after the reception processing to the control section 401 and/or the measurement section 405. The received signal processing section 404 outputs, for example, higher layer control information of higher layer signaling, and L1/L2 control information (e.g., a UL grant and/or a DL assignment) to the control section 401.

The received signal processing section 404 can be composed of a signal processor, a signal processing circuit or a signal processing apparatus described based on the common knowledge in the technical field according to the present invention. Furthermore, the received signal processing section 404 can compose the reception section according to the present invention.

The measurement section 405 measures a channel state based on the reference signal (e.g., CSI-RS) from the radio base station 10, and outputs a measurement result to the control section 401. In addition, the measurement section 405 may measure the channel state per CC.

The measurement section 405 can be composed of a signal processor, a signal processing circuit or a signal processing apparatus, and a measurement instrument, a measurement circuit or a measurement apparatus described based on the common knowledge in the technical field according to the present invention.

### <Hardware Configuration>

In addition, the block diagrams used to describe the above embodiments illustrate blocks in function units. These function blocks (components) are realized by an optional combination of hardware and/or software. Furthermore, means for realizing each function block is not limited in particular. That is, each function block may be realized by one physically and/or logically coupled apparatus or may be realized by a plurality of these apparatuses formed by connecting two or more physically and/or logically separate apparatuses directly and/or indirectly (by way of, for example, wired connection and/or radio connection).

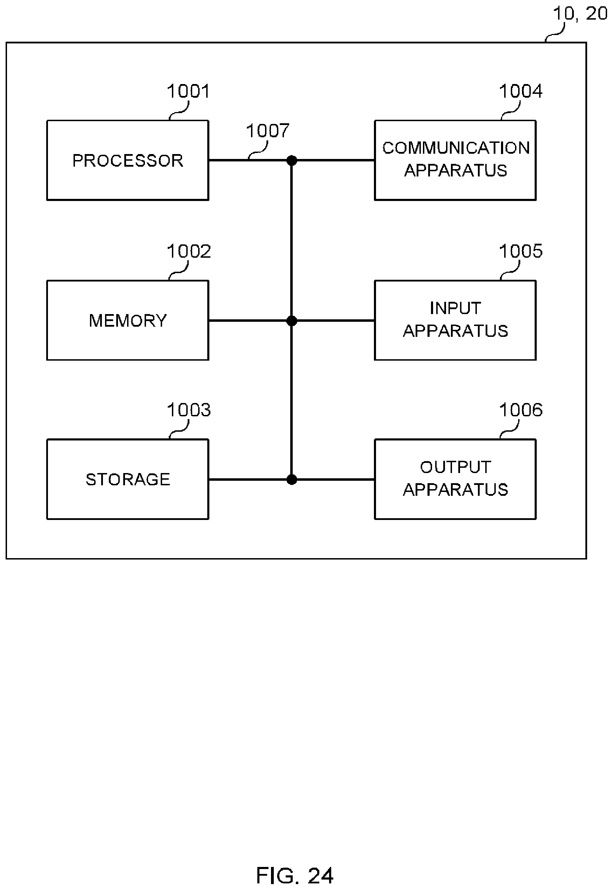

For example, the radio base station and the user terminal according to the present embodiment may function as computers that perform processing of the radio communication method according to the present invention. Fig. 24 is a diagram illustrating one example of the hardware configurations of the radio base station and the user terminal according to the present embodiment. The above radio base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the radio base station 10 and the user terminal 20 may be configured to include one or a plurality of apparatuses illustrated in Fig. 24 or may be configured without including part of the apparatuses.

For example, Fig. 24 illustrates the only one processor 1001. However, there may be a plurality of processors. Furthermore, processing may be executed by one processor or processing may be executed by one or more processors concurrently, successively or by another method. In addition, the processor 1001 may be implemented by one or more chips.

Each function of the radio base station 10 and the user terminal 20 is realized by, for example, causing hardware such as the processor 1001 and the memory 1002 to read given software (program), and thereby causing the processor 1001 to perform an operation, and control at least one of communication of the communication apparatus 1004 and reading and/or writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above baseband signal processing section 104 (204) and call processing section 105 may be realized by the processor 1001.

Furthermore, the processor 1001 reads programs (program codes), a software module or data from the storage 1003 and/or the communication apparatus 1004 out to the memory 1002, and executes various types of processing according to these programs, software module or data. As the programs, programs that cause the computer to execute at least part of the operations described in the above embodiments are used. For example, the control section 401 of the user terminal 20 may be realized by a control program stored in the memory 1002 and operating on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to carry out the radio communication method according to the one embodiment of the present invention.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via a wired and/or radio network, and is also referred to as, for example, a network device, a network controller, a network card and a communication module. The communication apparatus 1004 may be configured to include a high frequency switch, a duplexer, a filter and a frequency synthesizer to realize, for example, Frequency Division Duplex (FDD) and/or Time Division Duplex (TDD). For example, the above transmission/reception antennas 101 (201), amplifying sections 102 (202), transmission/reception sections 103 (203) and channel interface 106 may be realized by the communication apparatus 1004.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus illustrated in Fig. 24 is connected by the bus 1007 that communicates information. The bus 1007 may be composed of a single bus or may be composed of buses that are different between apparatuses.

Furthermore, the radio base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may realize part or all of each function block. For example, the processor 1001 may be implemented by at least one of these types of hardware.

### (Modified Example)

In addition, each term that has been described in this description and/or each term that is necessary to understand this description may be replaced with terms having identical or similar meanings. For example, a channel and/or a symbol may be signals (signaling). Furthermore, a signal may be a message. A reference signal can be also abbreviated as an RS (Reference Signal), or may be also referred to as a pilot or a pilot signal depending on standards to be applied. Furthermore, a Component Carrier (CC) may be referred to as a cell, a frequency carrier and a carrier frequency.

Furthermore, a radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

Furthermore, the slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerologies. Furthermore, the slot may include a plurality of mini slots. Each mini slot may include one or a plurality of symbols in the time domain.

The radio frame, the subframe, the slot, the mini slot and the symbol each indicate a time unit for transmitting signals. The other corresponding names may be used for the radio frame, the subframe, the slot, the mini slot and the symbol. For example, 1 subframe may be referred to as a Transmission Time Interval (TTI), a plurality of contiguous subframes may be referred to as TTIs, or 1 slot or 1 mini slot may be referred to as a TTI. That is, the subframe and/or the TTI may be a subframe (1 ms) according to legacy LTE, may be a duration (e.g., 1 to 13 symbols) shorter than 1 ms or may be a duration longer than 1 ms.

In this regard, the TTI refers to, for example, a minimum time unit of scheduling for radio communication. For example, in the LTE system, the radio base station performs scheduling for allocating radio resources (a frequency bandwidth and/or transmission power that can be used by each user terminal) in TTI units to each user terminal. In this regard, a definition of the TTI is not limited to this. The TTI may be a transmission time unit of a channel-coded data packet (transport block), or may be a processing unit of scheduling and/or link adaptation. In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe or a long subframe. A TTI shorter than the general TTI may be referred to as a reduced TTI, a short TTI, a partial or fractional TTI, a reduced subframe or a short subframe.

Resource Blocks (RBs) are resource allocation units of the time domain and the frequency domain, and may include one or a plurality of contiguous subcarriers in the frequency domain. Furthermore, the RB may include one or a plurality of symbols in the time domain or may have the length of 1 slot, 1 mini slot, 1 subframe or 1 TTI. 1 TTI or 1 subframe may each include one or a plurality of resource blocks. In this regard, the RB may be referred to as a Physical Resource Block (PRB: Physical RB), a PRB pair or an RB pair.

Furthermore, the resource block may include one or a plurality of Resource Elements (REs). For example, 1 RE may be a radio resource domain of 1 subcarrier and 1 symbol.

In this regard, structures of the above radio frame, subframe, slot, mini slot and symbol are only exemplary structures. For example, configurations such as the number of subframes included in a radio frame, the number of slots per subframe or radio frame, the number of mini slots included in a slot, the numbers of symbols included in a slot or a mini slot, the number of subcarriers included in an RB, the number of symbols in a TTI, a symbol length and a Cyclic Prefix (CP) length can be variously changed.

Furthermore, the information and parameters described in this description may be expressed by absolute values, may be expressed by relative values with respect to given values or may be expressed by other corresponding information. For example, a radio resource may be instructed by a given index. Furthermore, numerical expressions that use these parameters may be different from those explicitly disclosed in this description.

Names used for parameters in this description are in no respect restrictive ones. For example, various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive ones.

The information and the signals described in this description may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or optional combinations of these.

Furthermore, the information and the signals can be output from a higher layer to a lower layer and/or from the lower layer to the higher layer. The information and the signals may be input and output via a plurality of network nodes.

The input and output information and signals may be stored in a specific location (e.g., memory) or may be managed by a management table. The input and output information and signals can be overwritten, updated or additionally written. The output information and signals may be deleted. The input information and signals may be transmitted to other apparatuses.

Notification of information is not limited to the aspects/embodiments described in this description and may be performed by other methods. For example, the information may be notified by physical layer signaling (e.g., Downlink Control Information (DCI) and Uplink Control Information (UCI)), higher layer signaling (e.g., Radio Resource Control (RRC) signaling, broadcast information (Master Information Blocks (MIBs) and System Information Blocks (SIBs)), and Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by, for example, an MAC Control Element (MAC CE).

Furthermore, notification of given information (e.g., notification of "being X") may be made not only explicitly but also implicitly (by, for example, not notifying this given information or by notifying another information).

Decision may be made based on a value (0 or 1) expressed by 1 bit, may be made based on a boolean expressed by true or false or may be made by comparing numerical values (e.g., comparison with a given value).

Irrespectively of whether software is referred to as software, firmware, middleware, a microcode or a hardware description language or as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using wired techniques (e.g., coaxial cables, optical fiber cables, twisted pairs and Digital Subscriber Lines (DSL)) and/or radio techniques (e.g., infrared rays and microwaves), these wired techniques and/or radio technique are included in a definition of the transmission media.

The terms "system" and "network" used in this description are compatibly used.

In this description, the terms "Base Station (BS)", "radio base station", "eNB", "gNB", "cell", "sector", "cell group", "carrier" and "component carrier" can be compatibly used. The base station is also referred to as a term such as a fixed station, a NodeB, an eNodeB (eNB), an access point, a transmission point, a reception point, a femtocell or a small cell in some cases.

The base station can accommodate one or a plurality of (e.g., three) cells (also referred to as sectors). When the base station accommodates a plurality of cells, an entire coverage area of the base station can be partitioned into a plurality of smaller areas. Each smaller area can provide communication service via a base station subsystem (e.g., indoor small base station (RRH: Remote Radio Head)). The term "cell" or "sector" indicates part or the entirety of the coverage area of the base station and/or the base station subsystem that provide communication service in this coverage.

In this description, the terms "Mobile Station (MS)", "user terminal", "User Equipment (UE)" and "terminal" can be compatibly used.

The mobile station is also referred to by a person skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

Furthermore, the radio base station in this description may be read as the user terminal. For example, each aspect/embodiment of the present invention may be applied to a configuration where communication between the radio base station and the user terminal is replaced with communication between a plurality of user terminals (D2D: Device-to-Device). In this case, the user terminal 20 may be configured to include the functions of the above radio base station 10. Furthermore, words such as "uplink" and/or "downlink" may be read as "sides". For example, the uplink channel may be read as a side channel.

Similarly, the user terminal in this description may be read as the radio base station. In this case, the radio base station 10 may be configured to include the functions of the above user terminal 20.

In this description, specific operations performed by the base station are performed by an upper node of this base station depending on cases. Obviously, in a network including one or a plurality of network nodes including the base stations, various operations performed to communicate with a terminal can be performed by base stations, one or more network nodes (that are supposed to be, for example, Mobility Management Entities (MME) or Serving-Gateways (S-GW) yet are not limited to these) other than the base stations or a combination of these.

Each aspect/embodiment described in this description may be used alone, may be used in combination or may be switched and used when carried out. Furthermore, orders of the processing procedures, the sequences and the flowchart according to each aspect/embodiment described in this description may be rearranged unless contradictions arise. For example, the method described in this description presents various step elements in an exemplary order and is not limited to the presented specific order.

Each aspect/embodiment described in this description may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods and/or next-generation systems that are expanded based on these systems.

The phrase "based on" used in this description does not mean "based only on" unless specified otherwise. In other words, the phrase "based on" means both of "based only on" and "based at least on".

Every reference to elements that use names such as "first" and "second" used in this description does not generally limit the quantity or the order of these elements. These names can be used in this description as a convenient method for distinguishing between two or more elements. Hence, the reference to the first and second elements does not mean that only two elements can be employed or the first element should precede the second element in some way.

The term "deciding (determining)" used in this description includes diverse operations in some cases. For example, "deciding (determining)" may be regarded to "decide (determine)" calculating, computing, processing, deriving, investigating, looking up (e.g., looking up in a table, a database or another data structure) and ascertaining. Furthermore, "deciding (determining)" may be regarded to "decide (determine)" receiving (e.g., receiving information), transmitting (e.g., transmitting information), input, output and accessing (e.g., accessing data in a memory). Furthermore, "deciding (determining)" may be regarded to "decide (determine)" resolving, selecting, choosing, establishing and comparing. That is, "deciding (determining)" may be regarded to "decide (determine)" some operation.

The words "connected" and "coupled" used in this description or every modification of these words can mean every direct or indirect connection or coupling between two or more elements, and can include that one or more intermediate elements exist between the two elements "connected" or "coupled" with each other. The elements may be coupled or connected physically, logically or by way of a combination of physical and logical connections. It can be understood that, when used in this description, the two elements are "connected" or "coupled" with each other by using one or more electric wires, cables and/or printed electrical connection, and by using electromagnetic energy having wavelengths in radio frequency domains, microwave domains and/or (both of visible and invisible) light domains in some non-restrictive and incomprehensive examples.

When the words "including" and "comprising" and modifications of these words are used in this description or the claims, these words intend to be comprehensive similar to the word "having". Furthermore, the word "or" used in this description or the claims intends not to be an exclusive OR.

The present invention has been described in detail above. However, it is obvious for a person skilled in the art that the present invention is not limited to the embodiments described in this description. The present invention can be carried out as modified and changed aspects without departing from the the scope of the present invention defined by the recitation of the claims. Accordingly, the disclosure of this description intends for exemplary explanation, and does not have any restrictive meaning to the present invention.

## Claims

1. A terminal (20) comprising:
a reception section (203) configured to receive indication information on a downlink control channel, the indication information indicating a slot format that indicates a type of each symbol, which is included in each of multiple slots having a reference subcarrier spacing, the type of each symbol being indicated as one of a type of symbol indicating a transmission direction of uplink, UL, or downlink, DL, and a type of symbol not indicating a transmission direction; and
a control section (401) configured to control, based on the indication information, transmission or reception in a bandwidth part having a subcarrier spacing that is different from the reference subcarrier spacing,
wherein the control section (401) determines that N contiguous symbols in a bandwidth part having the subcarrier spacing correspond to one symbol in a bandwidth part having the reference subcarrier spacing in a same time domain, and
wherein the subcarrier spacing is N times the reference subcarrier spacing.

2. The terminal (20) according to claim 1, wherein when one symbol in the bandwidth part having the reference subcarrier spacing is a DL symbol, N contiguous symbols in the bandwidth part having the subcarrier spacing are DL symbols, and when the one symbol is a UL symbol, the N contiguous symbols are UL symbols.

3. The terminal (20) according to claim 2, wherein when the reference subcarrier spacing is 15 kHz and the subcarrier spacing is 30 kHz, N is 2.

4. A radio communication method of a terminal (20) comprising:
receiving an indication information on a downlink control channel, the indication information indicating a slot format that indicates a type of each symbol, which is included in each of multiple slots having a reference subcarrier spacing, the type of each symbol being indicated as one of a type of symbol indicating a transmission direction of uplink, UL, or downlink, DL, and a type of symbol not indicating a transmission direction;
controlling, based on the indication information, transmission or reception in a bandwidth part having a subcarrier spacing that is different from the reference subcarrier spacing, and
determining N contiguous symbols in a bandwidth part having the subcarrier spacing correspond to one symbol in a bandwidth part having the reference subcarrier spacing in the same time domain, and
wherein the subcarrier spacing is N times the reference subcarrier spacing.

5. A system (1) comprising a terminal (20) and a base station (10):
the terminal (20) is according to claim 1, and
the base station (10) comprises:
a transmission section (103) configured to transmit the indication information on the downlink control channel.

## Patentansprüche

1. Endgerät (20), das umfasst:
einen Empfangsabschnitt (203), der so konfiguriert ist, dass er Anzeigeinformation auf einem Abwärtsverbindungssteuerkanal empfängt, wobei die Anzeigeinformation ein Schlitzformat anzeigt, das einen Typ jedes Symbols anzeigt, das in jedem von mehreren Schlitzen mit einem Referenzunterträgerabstand eingeschlossen ist, wobei der Typ jedes Symbols als einer von einem Symboltyp, der eine Übertragungsrichtung von Aufwärtsverbindung, UL, oder Abwärtsverbindung, DL, anzeigt, und einem Symboltyp, der keine Übertragungsrichtung anzeigt, angezeigt wird; und
einen Steuerabschnitt (401), der so konfiguriert ist, dass er auf der Grundlage der Anzeigeinformation die Übertragung oder den Empfang in einem Bandbreitenteil mit einem Unterträgerabstand steuert, der sich von dem Referenzunterträgerabstand unterscheidet,
wobei der Steuerabschnitt (401) bestimmt, dass N zusammenhängende Symbole in einem Bandbreitenteil mit dem Unterträgerabstand einem Symbol in einem Bandbreitenteil mit dem Referenzunterträgerabstand in einem gleichen Zeitbereich entsprechen, und
wobei der Unterträgerabstand das N-fache des Referenzunterträgerabstandes ist.

2. Endgerät (20) nach Anspruch 1, wobei, wenn ein Symbol in dem Bandbreitenteil mit dem Referenzunterträgerabstand ein DL-Symbol ist, N zusammenhängende Symbole in dem Bandbreitenteil mit dem Unterträgerabstand DL-Symbole sind, und wenn das eine Symbol ein UL-Symbol ist, die N zusammenhängenden Symbole UL-Symbole sind.

3. Endgerät (20) nach Anspruch 2, wobei, wenn der Referenzunterträgerabstand 15 kHz und der Unterträgerabstand 30 kHz beträgt, N gleich 2 ist.

4. Funkkommunikationsverfahren eines Endgeräts (20), das umfasst:
Empfangen einer Anzeigeinformation auf einem Abwärtsverbindungssteuerkanal, wobei die Anzeigeinformation ein Schlitzformat anzeigt, das einen Typ jedes Symbols anzeigt, das in jedem von mehreren Schlitzen mit einem Referenzunterträgerabstand eingeschlossen ist, wobei der Typ jedes Symbols als einer von einem Symboltyp, der eine Übertragungsrichtung von Aufwärtsverbindung, UL, oder Abwärtsverbindung, DL, anzeigt, und einem Symboltyp, der keine Übertragungsrichtung anzeigt, angezeigt wird;
Steuern, auf der Grundlage der Anzeigeinformation, des Übertragens oder Empfangens in einem Bandbreitenteil mit einem Unterträgerabstand, der sich von dem Referenzunterträgerabstand unterscheidet, und
Bestimmen von N zusammenhängenden Symbolen in einem Bandbreitenteil mit dem Unterträgerabstand, die einem Symbol in einem Bandbreitenteil mit dem Referenzunterträgerabstand im selben Zeitbereich entsprechen, und
wobei der Unterträgerabstand das N-fache des Referenzunterträgerabstandes ist.

5. System (1), das ein Endgerät (20) und eine Basisstation (10) umfasst:
das Endgerät (20) ist nach Anspruch 1, und
die Basisstation (10) umfasst:
einen Übertragungsabschnitt (103), der so konfiguriert ist, dass er die Anzeigeinformation auf dem Abwärtsverbindungssteuerkanal überträgt.

## Revendications

1. Terminal (20) comprenant :
une section de réception (203) configurée pour recevoir des informations d'indication relatives à un canal de commande de liaison descendante, les informations d'indication indiquant un format d'intervalle qui indique un type pour chaque symbole, qui est inclus dans chacun des intervalles multiples présentant un espacement de sous-porteuse de référence, le type de chaque symbole étant indiqué soit comme un type de symbole indiquant une direction de transmission de liaison montante, UL - uplink -, ou de liaison descendante, - DL - downlink, soit un type de symbole n'indiquant pas la direction de transmission ; et
une section de commande (401) configurée pour commander, sur la base des informations d'indication, la transmission ou la réception dans une partie de bande passante présentant un espacement de sous-porteuse qui est différent de l'espacement de sous-porteuse de référence,
dans lequel la section de commande (401) détermine que N symboles contigus dans une partie de bande passante présentant l'espacement de sous-porteuse correspondent à un symbole dans une partie de bande passante présentant l'espacement de sous-porteuse de référence dans un même domaine temporel, et
dans lequel l'espacement de sous-porteuse représente N fois l'espacement de sous-porteuse de référence.

2. Terminal (20) selon la revendication 1, dans lequel lorsqu'un symbole dans la partie de bande passante présentant l'espacement de sous-porteuse de référence est un symbole DL, N symboles contigus dans la partie de bande passante présentant l'espacement de sous-porteuse sont des symboles DL, et lorsque le symbole est un symbole UL, les N symboles contigus sont des symboles UL.

3. Terminal (20) selon la revendication 2, dans lequel lorsque l'espacement de sous-porteuse de référence est 15 kHz et l'espacement de sous-porteuse est 30 kHz, N est égal à 2.

4. Procédé de radiocommunication d'un terminal (20) comprenant :
recevoir des informations d'indication relatives à un canal de commande de liaison descendante, les informations d'indication indiquant un format d'intervalle qui indique un type pour chaque symbole, qui est inclus dans chacun des intervalles multiples présentant un espacement de sous-porteuse de référence, le type de chaque symbole étant indiqué comme un type de symbole indiquant une direction de transmission de liaison montante, UL - uplink -, ou de liaison descendante, DL - downlink -, et un type de symbole n'indiquant pas la direction de transmission ;
commander, sur la base des informations d'indication, la transmission ou la réception dans une partie de bande passante présentant un espacement de sous-porteuse qui est différent de l'espacement de sous-porteuse de référence, et
déterminer que N symboles contigus dans une partie de bande passante présentant l'espacement de sous-porteuse correspondent à un symbole dans une partie de bande passante présentant l'espacement de sous-porteuse de référence dans le même domaine temporel, et
dans lequel l'espacement de sous-porteuse représente N fois l'espacement de sous-porteuse de référence.

5. Système (1) comprenant un terminal (20) et une station de base (10) :
le terminal (20) est selon la revendication 1, et
la station de base (10) comprend :
une section de transmission (103) configurée pour transmettre les informations d'indication relatives au canal de commande de liaison descendante.
